# EUROPEAN PATENT SPECIFICATION

(11) **EP 3 018 326 B1**
(45) Date of publication and mention of the grant of the patent: **19.06.2019**
(21) Application number: 15187816.2
(22) Date of filing: 01.10.2015
(51) Int. Cl.: F02D 41/04, B60K 37/00

(54) **STRADDLE-TYPE VEHICLE**
GRÄTSCHSITZFAHRZEUG
VÉHICULE DE TYPE À SELLE

(30) Priority: 05.11.2014 JP 2014225217
(43) Date of publication of application: 11.05.2016
(73) Proprietor: Yamaha Hatsudoki Kabushiki Kaisha, Iwata-shi, Shizuoka 438-8501 (JP)
(72) Inventor: SASAKI, Yuichi, Iwata-shi, Shizuoka 438-8501 (JP); AKIMOTO, Yusuke, Iwata-shi, Shizuoka 438-8501 (JP); MORIWAKI, Yuuji, Iwata-shi, Shizuoka 438-8501 (JP)
(74) Representative: Grünecker Patent- und Rechtsanwälte PartG mbB

(56) References cited:
- EP-A1- 2 311 683
- EP-A2- 2 299 095
- WO-A2-2006/054971
- DE-A1-102008 064 023
- US-A1- 2009 143 934
- US-A1- 2010 259 374
- US-A1- 2012 065 874

## Description

The present invention relates to a straddle-type vehicle equipped with a reporting component that gives a report related to fuel economy to the rider and to a method for controlling a straddle-type vehicle.

Prior art document WO 2006/054971 A2 discloses a system and method for guiding an operator to optimized engine operation. Said system and method provide information to an operator of an engine such that the engine operates with optimal performance, such as maximal fuel efficiency. Such a system may include a plurality of sensors adapted to measure operating parameters of the engine; an engine management system adapted to receive measured operating parameters from the sensors and to generate signals indicative of a current operating performance of the engine and signals indicative of performance-increasing adjustments to current operating parameters; and a display adapted to present symbols in response to signals from the engine management system. The symbols guide the operator to increase or maintain engine performance.

Prior art document EP 2 299 095 A2 discloses an engine control system for a vehicle with an economy lamp for indicating that the current driving state is a fuel-efficient condition. Said lamp is connected to the electronic control unit. The electronic control unit includes a fuel-efficient driving state determiner that determines whether the current driving state is a fuel-efficient condition. The fuel-efficient driving state determiner determines, for example, whether the engine speed falls within a predetermined numeric range, whether a change amount of the engine speed falls within a predetermined range, whether the opening degree of the throttle valve falls within a predetermined opening degree range, whether a change amount of the opening degree of the throttle valve falls within a predetermined range, whether the vehicle speed is higher than zero, and whether the clutch lever has been operated, and, if "YES" in at least one of these determinations, determines that the current driving state is a fuel-efficient condition and turns on the economy lamp.

Prior art document US 2010/0259374 A1 discloses an ECO-drive assist apparatus and method. Sensor signals from various sensors are provided to a power train ECU. The sensor signals represent the accelerator opening measured by an accelerator opening sensor, the vehicle speed measured by a vehicle speed sensor, the shift position detected by a shift position sensor, etc. The power train ECU has an eco judgment unit. Based on the driving state of the vehicle, the eco judgment unit calculates a judgment threshold value and a state quantity of eco-drive indicating a ratio to the judgment threshold value. The eco judgment unit provides, to a meter ECU, an eco state signal indicating the state quantity of eco-drive. The meter ECU includes a notice control unit and the notice control unit obtains the eco state signal indicating the degree of eco-drive of the vehicle from the eco judgment unit and, based on the eco state signal, switches the display on the indicator panel.
Prior art document US 2009/0143934 A1 discloses an eco-drive support device that notifies a driver of the eco-friendliness of a vehicle driving operation being performed by the driver includes: an operating unit that calculates eco-drive support information that indicates the eco-friendliness of the vehicle driving operation being performed by the driver; and a notification control unit that controls a notifying unit to notify the driver of the eco-drive support information, if there is a request from an input unit for notification of the eco-drive support information. In this device, the notification control unit controls the notifying unit to notify the driver of the eco-drive support information though there is not a request from the input unit for notification of the eco-drive support information, if a predetermined condition for providing the eco-drive support information is satisfied.

A vehicle equipped with a reporting component that gave a report related to fuel economy to the rider was known in the past. Fuel economy is expressed, for example, as the distance that can be traveled on a specific amount of fuel, or as the amount of fuel needed to travel a specific distance. If the distance that can be traveled on a specific amount of fuel is used as fuel economy, then the longer is the distance that can be traveled, the better the fuel economy. Fuel economy is also sometimes called the fuel consumption rate.

For example, the vehicle disclosed in Japanese Laid-Open Patent Application 2009-156132 is equipped with an economy lamp as a reporting component that reports information related to fuel economy. This economy lamp, for example, is lit when the vehicle is determined to be traveling in a state of good fuel economy, and is extinguished when the vehicle is determined to be traveling in a state of poor fuel economy. Because an economy lamp or other such reporting component reports information related to fuel economy to the rider, it is anticipated that this will serve as motivation for the rider to operate the vehicle in a state of better fuel economy.

With the economy lamp disclosed in Japanese Laid-Open Patent Application 2009-156132, whether or not to light the lamp is determined on the basis of the vehicle speed and the throttle opening, by referring to a preset fuel economy map. The vehicle speed is sensed by a vehicle speed sensor. The vehicle is determined to be stopped when the vehicle speed sensed by the vehicle speed sensor drops below 2 km/h. The economy lamp is extinguished in a stopped state.

However, there are some straddle-type vehicles that are not equipped with a vehicle speed sensor. And sometimes an economy lamp is installed in a straddle-type vehicle that is not equipped with a vehicle speed sensor. Vehicle speed cannot be used as a condition for determining whether or not to light an economy lamp on a straddle-type vehicle that is not equipped with a vehicle speed sensor. Therefore, there are situations in which the economy lamp is lit without taking into account the travel state of the straddle-type vehicle.

For example, during low-speed travel in stop-and-go traffic, or when the brakes have been applied to stop the vehicle, there will be situations when the rider is continuously opening and closing the throttle. Depending on the throttle operation by the rider, the economy lamp will be lit when certain conditions are met, such as engine speed or throttle opening.

However, we cannot truly say that the vehicle is in a travel state of good fuel economy when it is in a state of low-speed travel in stop-and-go traffic or is stopped. Thus, with a straddle-type vehicle not equipped with a vehicle speed sensor, the economy lamp would sometimes be lit despite the fact that it was not in a travel state of good fuel economy.

It is an object of the present invention to provide a straddle-type vehicle equipped with a reporting component and a method for controlling a straddle-type vehicle giving the proper report in a straddle-type vehicle equipped with a reporting component that reports information related to fuel economy to the rider.

According to the present invention said object is solved by a straddle-type vehicle having the features of independent claim 1 and by a method for controlling a straddle-type vehicle having the features of independent claim 14. Preferred embodiments are laid down in the dependent claims.

The straddle-type vehicle pertaining to an embodiment comprises an engine, an intake volume adjuster for increasing or decreasing the intake volume of the engine, an intake information sensor for sensing intake information related to the intake volume of the engine adjusted by the intake volume adjuster, an engine speed sensor for sensing the speed of the engine, a reporting component for reporting information related to the fuel economy of the engine, and a controller that determines whether or not the fuel economy is good on the basis of the intake information sensed by the intake information sensor and the engine speed sensed by the engine speed sensor, and also causes the reporting component to give a report on the condition that the fuel economy is determined to be good. The controller further includes a time determination component that uses a specific engine speed that is higher than a preset idle speed as a base engine speed, and that determines whether or not the elapsed time since the engine speed sensed by the engine speed sensor went over this base engine speed has exceeded a preset base time. The controller does not cause the reporting component to give a report if the time determination component has not determined that the base time has been exceeded, even though the fuel economy has been determined to be good on the basis of the intake information sensed by the intake information sensor and the engine speed sensed by the engine speed sensor.

With the straddle-type vehicle pertaining to an embodiment, if the rider continuously opens and closes the throttle in heavy traffic or when stopped, for example, there may be cases when fuel economy is temporarily determined to be good. However, the reporting component will not give a report if the elapsed time since the engine speed went over the base engine speed has not exceeded the base time. Accordingly, when fuel economy is determined to be good, the reporting component will be less likely to give a false report when the fuel economy is not in fact good, which means that better reporting can be achieved.

With the straddle-type vehicle pertaining to an embodiment, the controller does not cause the reporting component to give a report if the time determination component has not determined that the base time has not been exceeded, and if the fuel economy has been determined to be good on the basis of the intake information sensed by the intake information sensor and the engine speed sensed by the engine speed sensor.

With the straddle-type vehicle pertaining to an embodiment, the reporting component will be less likely to give a false report when the fuel economy is not in fact good, which means that better reporting can be achieved.

With the straddle-type vehicle pertaining to an embodiment, the controller causes the reporting component to give a report if the time determination component has determined that the base time has been exceeded, and if the fuel economy has been determined to be good on the basis of the intake information sensed by the intake information sensor and the engine speed sensed by the engine speed sensor.

With the straddle-type vehicle pertaining to an embodiment, the reporting component will be less likely to give a false report when the fuel economy is not good, and the accuracy of the report given by the reporting component can be improved when the fuel economy is good.

With the straddle-type vehicle pertaining to an embodiment, the reporting component will not give a report if the fuel economy is determined to be poor on the basis of the intake information sensed by the intake information sensor and the engine speed sensed by the engine speed sensor.

With the straddle-type vehicle pertaining to an embodiment, reporting by the reporting component can be quickly stopped in the even that there is a change from a state of good fuel economy to a state of poor fuel economy, for example.

With the straddle-type vehicle pertaining to an embodiment, the vehicle has no vehicle speed sensor for sensing the vehicle speed.

With the straddle-type vehicle pertaining to an embodiment, false reports by the reporting component will be less likely, and better reporting can be achieved, even though the vehicle speed sensor is eliminated.

With the straddle-type vehicle pertaining to an embodiment, the base engine speed is the same as the lowest engine speed out of all engine speeds at which the fuel economy is determined to be good.

With the straddle-type vehicle pertaining to an embodiment, the reporting component gives a report when a base time since the engine reached a state of good fuel economy has been exceeded. In other words, the reporting component gives a report if the engine has been kept in a state of good fuel economy for the base time. Accordingly, the reporting component is less likely to give a false report, and better reporting can be achieved.

The straddle-type vehicle pertaining to an embodiment further comprises a drive wheel that is driven by the rotation of the engine, and a clutch that automatically switches between transmitting and not transmitting the rotation of the engine to the drive wheel according to an increase or decrease in the engine speed. The base engine speed is set to be at least the engine speed at which the clutch switches from a state in which the rotation of the engine is not transmitted to the drive wheel, to a state in which the rotation of the engine is transmitted to the drive wheel.

With the straddle-type vehicle pertaining to an embodiment, the reporting component gives a report if a state in which the clutch transmits the rotation of the engine to the drive wheel, and travel is possible, is maintained for at least a base time. Accordingly, the reporting component is less likely to give a false report, and better reporting can be achieved.

With the straddle-type vehicle pertaining to an embodiment, the base time is set to a specific value of at least one second and no more than five seconds.

With the straddle-type vehicle pertaining to an embodiment, the reporting component can give a report at a timing at this not too late if false reporting by the reporting component is suppressed while the vehicle is actually traveling in a state of good fuel economy.

With the straddle-type vehicle pertaining to an embodiment, the intake information is throttle opening information.

With the straddle-type vehicle pertaining to an embodiment, whether or not the engine is in a state of good fuel economy can be directly determined on the basis of user input.

With the straddle-type vehicle pertaining to an embodiment, the intake information is intake pressure information.

With the straddle-type vehicle pertaining to an embodiment, whether or not the engine is in a state of good fuel economy can be directly determined on the basis of the actual state of the engine.

With the straddle-type vehicle pertaining to an embodiment, a continuance time, which is a specific length of time, is set, and the controller causes the reporting component to give a report on the condition that this continuance time is exceeded after the fuel economy has been determined to be good on the basis of the intake information sensed by the intake information sensor and the engine speed sensed by the engine speed sensor.

With the straddle-type vehicle pertaining to an embodiment, the reporting component gives a report if a state in which the fuel economy is determined to be good has been maintained for at least a certain continuance time. Accordingly, the reporting component will be less likely to give a false report, and better reporting can be achieved.

With the straddle-type vehicle pertaining to an embodiment, a plurality of continuance times are set corresponding to a plurality of mutually different sets of intake information. The controller causes the reporting component to give a report on the condition that the elapsed time since the fuel economy was determined to be good on the basis of the intake information sensed by the intake information sensor and the engine speed sensed by the engine speed sensor has exceeded the continuance time corresponding to the sensed intake information.

With the straddle-type vehicle pertaining to an embodiment, the timing of the report given by the reporting component can be varied according to various intake information, which allows more precise reports to be given. Thus, it is possible to control reporting to suit the perception of the rider.

With the straddle-type vehicle pertaining to an embodiment, a first continuance time is set for first intake information out of the plurality of sets of intake information, and a second continuance time that is longer than the first continuance time is set for second intake information that is larger in volume than the first intake information.

With the straddle-type vehicle pertaining to an embodiment, when the vehicle is traveling so that there is little intake information, reporting by the reporting component can be performed more quickly than when the vehicle is traveling so that there is a large volume of intake information. Accordingly, reporting by the reporting component can be performed quickly when the vehicle is transitioning from an accelerating state to a cruising state, for example, and the timing of the reporting can be precisely controlled to suit the perception of the rider.

### BRIEF DESCRIPTION OF THE DRAWINGS

FIG. 1 is a left side view of the simplified configuration of a motorcycle pertaining to Embodiment 1;
FIG. 2 is a view in the direction of the X arrow in FIG. 1;
FIG. 3 is a simplified diagram of an engine;
FIG. 4 is a simplified graph of an example of the relation between throttle opening and engine speed;
FIG. 5 is a simplified diagram of an engine control system;
FIG. 6 is a graph of the relation between throttle opening, engine speed, and fuel economy, as recorded to fuel economy determination criteria data;
FIG. 7 is a graph of the relation between throttle opening, engine speed, and fuel economy, as recorded to fuel economy determination criteria data, and the relation to base engine speed, as recorded to engine speed determination criteria data;
FIG. 8 is a flowchart of controlling a reporting component;
FIG. 9 is a simplified diagram of an engine control system pertaining to Embodiment 2;
FIG. 10 is a flowchart of controlling a reporting component in a motorcycle pertaining to Embodiment 2;
FIG. 11 is a simplified diagram of an engine control system pertaining to Embodiment 3;
FIG. 12 is a flowchart of controlling a reporting component in a motorcycle pertaining to Embodiment 3;
FIG. 13 is a simplified diagram of an engine control system pertaining to Embodiment 4;
FIG. 14 is a flowchart of controlling a reporting component in a motorcycle pertaining to Embodiment 4; and
FIG. 15 is a simplified diagram of an engine pertaining to a modification example.

### DESCRIPTION OF THE EMBODIMENTS

### Embodiment 1

The straddle-type vehicle pertaining to an embodiment will now be described through reference to the drawings. In this embodiment, a motorcycle 10 will be described as an example of a straddle-type vehicle. Components that are the same or equivalent in the drawings will be numbered the same, and those components will not be described more than once. The dimensions of the constituent members in the drawings do not faithfully represent the dimensions of the actual constituent members or the dimensional proportions of the various constituent members.

### Overall Configuration

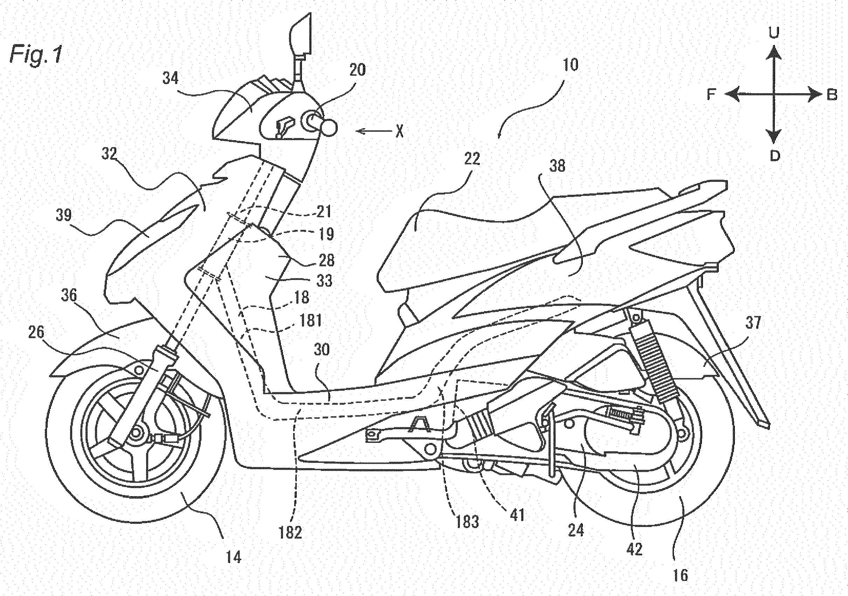

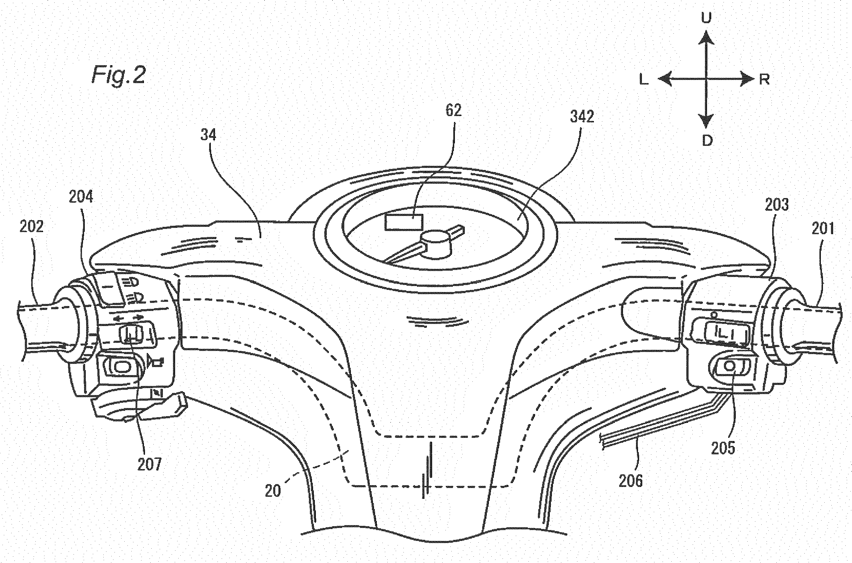

FIG. 1 is a left side view of the simplified configuration of the motorcycle 10 pertaining to Embodiment 1. FIG. 2 is a view in the direction of the X arrow in FIG. 1. In FIGS. 1 and 2, the arrow F indicates the front direction of the motorcycle 10, and the arrow B indicates the back direction of the motorcycle 10. The arrow R indicates the right direction of the motorcycle 10, and the arrow L indicates the left direction of the motorcycle 10. The arrow U indicates the up direction of the motorcycle 10, and the arrow D indicates the down direction of the motorcycle 10.

As shown in FIG. 1, the motorcycle 10 comprises a front wheel 14, a rear wheel 16, a body frame 18, a seat 22, a power unit 24, and a body cover 28. The body frame 18 comprises a head pipe 19, a front frame 181, an under frame 182, and a rear frame 183. The head pipe 19 is disposed at the front part of the body frame 18. The front frame 181 is connected to the head pipe 19, and extends rearward and downward. The under frame 182 is connected to the lower part of the front frame 181, and extends rearward. The rear frame 183 is connected to the rear part of the under frame 182, and extends rearward and upward.

A steering shaft 21 is rotatably inserted in the head pipe 19. A handlebar 20 is attached to the upper part of the steering shaft 21. A bracket (not shown) is connected to the lower part of the steering shaft 21. The bracket supports a front fork 26 having a pair of shafts. The front wheel 14 is rotatably attached to the lower part of the front fork 26. A seat 22 is attached to the rear frame 183.

A power unit 24 is pivotably attached to the lower part of the rear frame 183. The power unit 24 comprises an engine 41 and a CVT case 42. The rotation of the engine 41 is transmitted to the rear wheel 16. The CVT case 42 houses a continuously variable transmission (CVT). A continuously variable transmission is a type of automatic transmission, and continuously varies the gear ratio. The continuously variable transmission includes a clutch. The clutch in this embodiment is a centrifugal clutch. A centrifugal clutch automatically switches between transmitting and not transmitting the rotation of the engine 41 to the rear wheel 16, depending on an increase or decrease in engine speed. In this embodiment, an automatic transmission is used as the transmission, but a manual transmission may be used instead.

A body cover 28 covers the body frame 18. The body cover 28 includes a footboard 30, a front cover 32, a leg shield 33, a handlebar cover 34, a front fender 36, a rear fender 37, and a side cover 38.

The front cover 32 is disposed ahead of the head pipe 19. A headlight 39 is disposed in the front cover 32. The leg shield 33 is disposed to the rear of the head pipe 19. The leg shield 33 extends in the up and down direction. The handlebar cover 34 is attached to the handlebar 20. The footboard 30 is provided ahead of and below the seat 22. The front fender 36 is disposed above the front wheel 14. The rear fender 37 is disposed above the rear wheel 16. The side cover 38 is provided below the seat 22.

As shown in FIG. 2, the handlebar 20 is disposed ahead of the rider sitting on the seat 22. The handlebar 20 extends in the left and right direction. The center part of the handlebar 20 is covered by the handlebar cover 34. A right grip 201 is attached to the right end of the handlebar 20. The right grip 201 is a throttle grip for varying the speed of the engine 41. The right grip 201 is able to rotate around a center axis extending in the right and left direction of the handlebar 20. A left grip 202 is attached to the left end of the handlebar 20.

A first switch disposition component 203 is disposed near the right grip 201. A first switch 205 is attached to the first switch disposition component 203. The first switch 205 is used to start the engine 41. A throttle cable 206 extends from the lower part of the first switch disposition component 203. The throttle cable 206 is driven by rotating the right grip 201 with respect to the handlebar 20.

A second switch disposition component 204 is disposed near the left grip 202. A second switch 207 is attached to the second switch disposition component 204. The second switch 207 turns directional signal lamps on and off.

An engine tachometer 342 is attached in the center of the handlebar 20. The engine tachometer 342 displays the speed of the engine 41. A reporting component 62 is disposed on the engine tachometer 342. The reporting component 62 reports information related to the fuel economy of the engine 41. In this embodiment, the reporting component 62 is a lamp. The reporting component 62 in this embodiment is disposed on the engine tachometer 342, but may instead be disposed somewhere else. The motorcycle 10 in this embodiment is not equipped with a vehicle speed sensor for sensing the vehicle speed, but may be equipped with one.

### Configuration of Engine

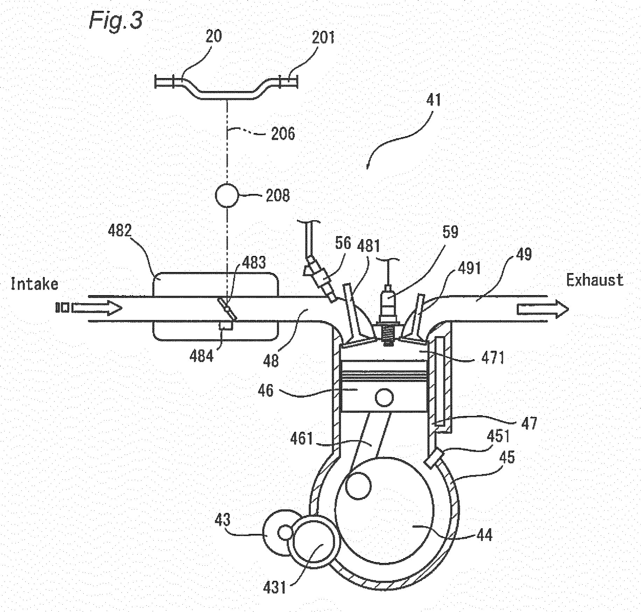

FIG. 3 is a simplified diagram of an engine. The engine 41 comprises a crankshaft 44, a crankcase 45, a piston 46, a cylinder 47, an intake port 48, an exhaust port 49, and a sparkplug 59.

The crankshaft 44 transmits the power generated by the engine 41 to a continuously variable transmission. The crankshaft 44 extends in a direction that is perpendicular to the plane of the drawing in FIG. 3.

A starter motor 43 rotates when electrical power is supplied by the operation of the first switch 205 provided to the handlebar 20. The starter motor 43 is connected to the crankshaft 44 via a gear 431. When the first switch 205 is pushed and the starter motor 43 rotates, the crankshaft 44 rotates and the engine 41 starts up.

The crankcase 45 houses the crankshaft 44. The cylinder 47 is attached to the crankcase 45. The piston 46 is housed in the cylinder 47. The piston 46 is able to move reciprocally inside the cylinder 47. The cylinder 47 and the piston 46 form a combustion chamber 471. The piston 46 is linked to the crankshaft 44 via a connecting rod 461. The intake port 48 and the exhaust port 49 are connected to the cylinder 47.

The intake port 48 supplies a mixture of air and fuel to the combustion chamber 471. A throttle body 482 and a fuel injector 56 are attached to the intake port 48. A throttle valve 483 is disposed in the throttle body 482.

The throttle valve 483 increases and decreases the amount of air drawn into the engine 41. More specifically, a change in the aperture of the throttle valve 483 (the throttle opening) increases or decreases the amount of air supplied to the combustion chamber 471. The throttle valve 483 corresponds to the intake volume adjuster of the present teaching. A pulley (not shown) that rotates the throttle valve 483 is attached on the outside of the throttle body 482. The throttle cable 206 is connected to this pulley. The throttle cable 206 is wound around a pulley 208 connected to the right grip 201 of the handlebar 20. When the right grip 201 is turned, the throttle valve 483 rotates via the throttle cable 206. That is, the aperture of the throttle valve 483 (throttle opening) can be varied by turning the right grip 201.

The fuel injector 56 is connected to a fuel pump (not shown). The fuel injector 56 sprays fuel into the air inside the intake port 48. When fuel is sprayed from the fuel injector 56, a mixture of fuel and air is formed inside the intake port 48. An intake valve 481 opens and closes at a specific timing so that the mixture will be drawn from the intake port 48 into the combustion chamber 471. The sparkplug 59 ignites the mixture drawn into the combustion chamber 471.

The exhaust port 49 evacuates the combustion gas from the combustion chamber 471. An exhaust valve 491 opens and closes at a specific timing so that the combustion gas is evacuated from the combustion chamber 471 to the exhaust port 49.

The amount of fuel sprayed from the fuel injector 56 is adjusted so that the air-fuel ratio (the proportion of air and fuel) will be at a specific value. When the aperture of the throttle valve 483 is varied by turning the right grip 201 (throttle grip), the air flow inside the intake port 48 changes. The fuel injector 56 varies the amount of fuel injection so as that air-fuel ratio will be at the specified value. Therefore, when the aperture of the throttle valve 483 is increased, more fuel is supplied to the combustion chamber 471, and the speed of the engine 41 tends to rise. Conversely, when the aperture of the throttle valve 483 is decreased, less fuel is supplied to the combustion chamber 471, and the speed of the engine 41 tends to fall.

A crank angle sensor 451 that senses the angular velocity of the crankshaft 44 is attached to the crankcase 45. The crank angle sensor 451 corresponds to the engine speed sensor of the present teaching. A throttle opening sensor 484 and an intake pressure sensor 485 are provided to the throttle body 482. The throttle opening sensor 484 senses the opening angle of the throttle valve 483 (throttle opening), and outputs a sensing signal corresponding to the throttle opening. The throttle opening sensor 484 corresponds to the intake information sensor of the present teaching. The throttle opening corresponds to intake information related to the intake volume of the engine 41.

### Relation of Operation Pattern to Throttle Opening TD and engine speed EN

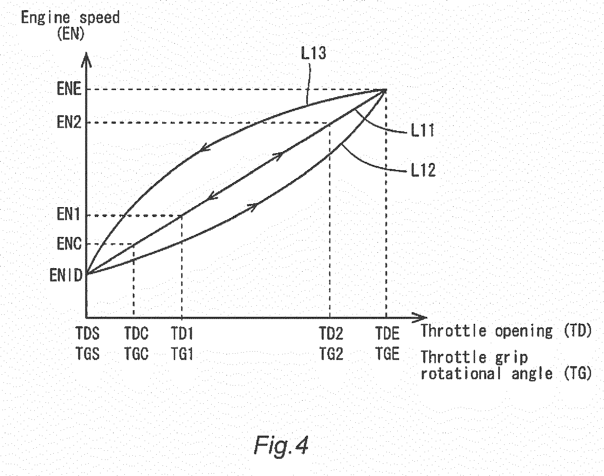

FIG. 4 is a simplified graph of an example of the relation between the throttle opening TD and the engine speed EN. The horizontal axis in FIG. 4 is the throttle opening TD and the throttle grip rotational angle TG. The throttle grip rotational angle TG is the rotational angle of the right grip 201. The right grip 201 can be operated by the rider to vary its rotational angle with respect to the handlebar 20. The right grip 201 is configured so that when not being operated by the rider, it is returned by an elastic member to a specific home position. The state when the right grip 201 is in its home position shall be called the throttle grip rotational angle TGS. The throttle grip rotational angle TG can be varied between TGS and TGE.

The throttle opening TD varies with the rotational angle of the right grip 201. The throttle opening TD varies between TDS and TDE, corresponding to changing the throttle grip rotational angle TG (the rotational angle of the right grip 201) from TGS to TGE. The opening angle of the throttle valve 483 is smallest at the throttle opening TDS, and the opening angle of the throttle valve 483 is largest at the throttle opening TDE.

The vertical axis in FIG. 4 is the engine speed EN, which is the speed at which the engine 41 is rotating. When the engine 41 is started in a state in which the right grip 201 is in its home position (the throttle grip rotational angle TGS), the engine 41 idles. We will let the engine speed EN in an idling state be the idle speed ENID. The idle speed ENID is preset as a speed at which the engine 41 can be kept running. At the idle speed ENID, the clutch of the continuously variable transmission is disengaged and does not transmit the rotation of the engine 41 to the rear wheel 16.

Let us assume that the engine speed EN was increased to a clutch engagement speed ENC by raising the throttle opening TD from TDS to TDC. The clutch engagement speed ENC is the lowest engine speed EN at which there is a change from a state in which the clutch does not transmit the rotation of the engine 41 to the rear wheel 16, to a state in which the rotation of the engine 41 is transmitted to the rear wheel 16. The rotation of the engine 41 is transmitted to the rear wheel 16 when the engine speed EN increases from the idle speed ENID to the clutch engagement speed ENC.

The line L11 in FIG. 4 shows an example of the operation pattern when the engine speed EN rises or falls in response to a rise or fall in the throttle opening TD. With the operation pattern indicated by the line L11, the engine speed EN increases linearly from ENID to ENC, EN1, EN2, and ENE when the throttle opening TD is increased from TDS to TDC, TD1, TD2, and TDE. Also, with the operation pattern indicated by the line L11, the engine speed EN decreases linearly from ENE to EN2, EN1, ENC, and ENID when the throttle opening TD is decreased from TDE to TD2, TD1, TDC, and TDS.

To simplify the description, the line L11 in FIG. 4 shows an operation pattern in which the engine speed EN rises and falls linearly along with the throttle opening TD. In an actual riding situation, acceleration may be either gradual or sudden. There are also situations when the throttle grip is operated while the motorcycle is stopped, and the throttle opening TD is continuously increased and decreased. That is, when the operation pattern changes, the relation between the rise and fall in the throttle opening TD and the rise and fall in the engine speed EN also changes.

For example, the relation between the throttle opening TD and the engine speed EN is different between an operation pattern in which the motorcycle accelerates from a stopped state to a moving state, and an operation pattern in which the motorcycle decelerates from a moving state to a stopped state. The line L12 in FIG. 4 shows the relation between the throttle opening TD and the engine speed EN in an example of an operation pattern in which the motorcycle accelerates from a stopped state to a moving state. Under acceleration, the proportional change in the engine speed EN is positive. The line L13 in FIG. 4 shows the relation between the throttle opening TD and the engine speed EN in an example of an operation pattern in which the motorcycle decelerates from a moving state to a stopped state. Under deceleration, the proportional change in the engine speed EN is negative.

A comparison of the line L12 and the line L13 reveals that the relation between the throttle opening TD and the engine speed EN is different. For example, the engine speed EN at the throttle openings TD1 and TD2 is higher on the line L13 than on the line L12. This is because when the throttle opening TD is reduced in a moving state, the motorcycle 10 moves under momentum, and the engine speed EN tends to remain high.

Thus, there are many different operation patterns in actual moving and stopped states. Different operation patterns will result in a different relation between the throttle opening TD and the engine speed EN. The fuel economy of the engine 41 also varies with the relation between the throttle opening TD and the engine speed EN.

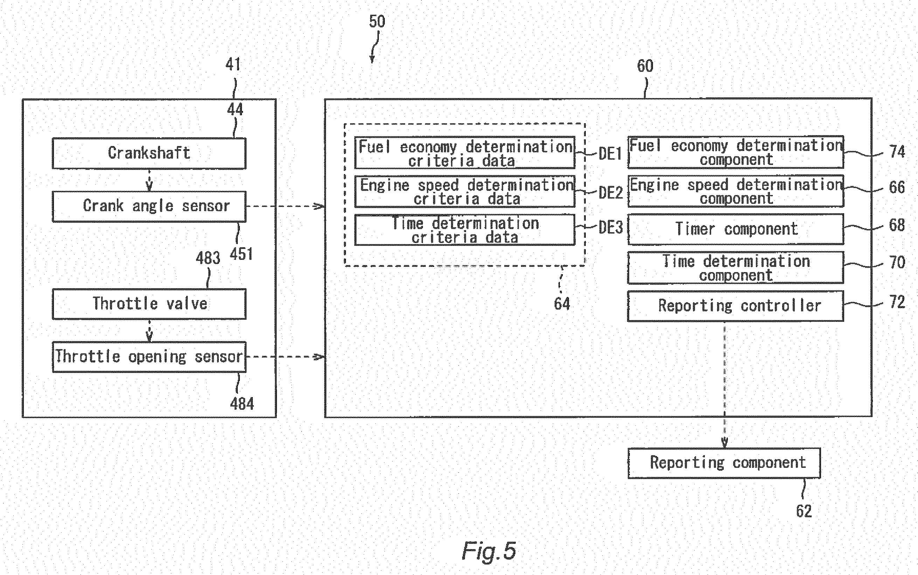

FIG. 5 is a simplified diagram of an engine control system. The motorcycle 10 is equipped with an engine control system 50. The engine control system 50 controls the engine 41. In FIG. 5, of the engine control system 50, mainly just the part involved with reporting information related to the fuel economy of the engine 41 is shown. The engine control system 50 comprises the engine 41, an engine controller 60, the crank angle sensor 451, the throttle opening sensor 484, and the reporting component 62.

The crank angle sensor 451 senses the angular velocity of the crankshaft 44. The sensing signal from the crank angle sensor 451 is inputted to the engine controller 60. The engine controller 60 computes the engine speed EN on the basis of the sensing signal from the crank angle sensor 451.

The throttle opening sensor 484 senses the opening angle of the throttle valve 483. The sensing signal from the throttle opening sensor 484 is inputted to the engine controller 60. The engine controller 60 computes the opening angle of the throttle valve 483 (throttle opening TD) on the basis of the sensing signal from the throttle opening sensor 484.

The reporting component 62 is connected to the engine controller 60. In this embodiment, the reporting component 62 is a lamp. This lamp is lit when the motorcycle is determined to be in a moving state with good fuel economy, and is extinguished when it is determined that the fuel economy of the moving state is poor.

The engine controller 60 comprises a memory 64, a fuel economy determination component 74, an engine speed determination component 66, a timer component 68, a time determination component 70, and a reporting controller 72.

The memory 64 stores data that records determination criteria related to reporting done by the reporting component 62. The memory 64 holds fuel economy determination criteria data DE1, engine speed determination criteria data DE2, and time determination criteria data DE3.

The fuel economy determination component 74 refers to the fuel economy determination criteria data DE1 stored in the memory 64, and determines whether or not the fuel economy of the engine 41 is good on the basis of the throttle opening TD and the engine speed EN. The throttle opening TD and the engine speed EN, as discussed above, are calculated on the basis of the sensing signal from the throttle opening sensor 484 and the sensing signal from the crank angle sensor 451. Determination criteria for determining whether or not the fuel economy is good on the basis of the throttle opening TD and the engine speed EN are recorded to the fuel economy determination criteria data DE1. The fuel economy determination criteria data DE1 will be discussed below.

The engine speed determination component 66 refers to the engine speed determination criteria data DE2 stored in the memory 64, and determines whether or not the engine speed EN is at least a base engine speed ENB. The base engine speed ENB is recorded to the engine speed determination criteria data DE2. The engine speed determination criteria data DE2 will be discussed below.

The timer component 68 measures how much time has elapsed since the engine speed determination component 66 determined that the engine speed EN was at least the base engine speed ENB.

The time determination component 70 refers to the time determination criteria data DE3 stored in the memory 64, and determines whether or not the elapsed time measured by the timer component 68 has exceeded a base time TB. The base time TB is recorded to the time determination criteria data DE3. A value such as two seconds or three seconds is set as the base time TB. In this embodiment, the base time TB is set to two seconds.

The reporting controller 72 controls whether the lamp (the reporting component 62) is lit or not. The reporting controller 72 lights the lamp (the reporting component 62) when it is determined that specific conditions have been met. These specific conditions include a first condition and a second condition. The first condition is met when the fuel economy determination component 74 has determined the fuel economy to be good. The second condition is met when the elapsed time since the engine speed EN went over the base engine speed ENB is determined by the time determination component 70 to have exceeded the base time TB.

The reporting controller 72 determines whether or not the first and second conditions are met. The reporting controller 72 does not light the lamp if the first condition has not been met. The reporting controller 72 does not light the lamp if the second condition has not been met, even though the first condition has been met. The reporting controller 72 does light the lamp if the first condition and the second condition have both been met. Even if the lamp is lit because the first and second conditions are first met, the reporting controller 72 will extinguish the lamp if either the first condition or the second condition is no longer being met. Also, the reporting controller 72 switches a flag related to the second condition on and off. This flag is used to prevent repeated determination of whether or not the second condition has been met. The reporting controller 72 switches on the flag when the second condition is determined to have been met, and switches it off when the second condition is no longer being met. The flag is off in its initial state.

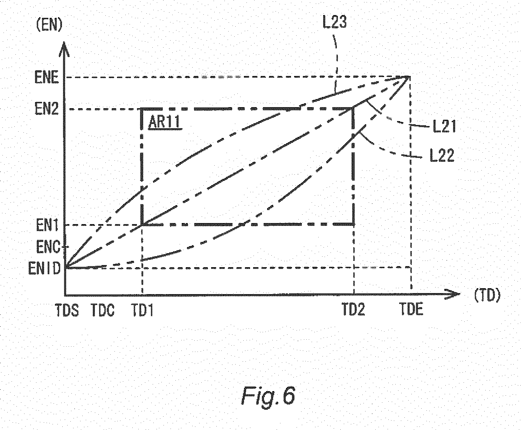

FIG. 6 is a graph of the relation between the throttle opening TD, the engine speed EN, and fuel economy, as recorded to the fuel economy determination criteria data. the horizontal axis of the graph is the throttle opening TD, and the vertical axis is the engine speed EN. We will assume that the engine 41 in this embodiment varies between the engine speeds ENID and ENE, corresponding to changes between throttle openings TDS and TDE, according to various operation patterns. With the fuel economy determination criteria data DE1 in this embodiment, a region AR11, which is between the throttle openings TD1 and TD2 and between the engine speeds EN1 and EN2 out of the graph region bounded by the engine speeds ENID to ENE and the throttle openings TDS to TDE, is the region in which fuel economy is determined to be good. Also, the region other than the region AR11 out of the graph region bounded by the engine speeds ENID to ENE and the throttle openings TDS to TDE is the region in which fuel economy is determined to be poor.

In FIG. 6, the lines L21, L22, and L23 show an example of the relation between the throttle opening TD and the engine speed EN in different operation patterns. With the operation patterns of the lines L21, L22, and L23, the fuel economy determination component 74 determines the fuel economy to be good in a state of operating in the portions of the lines L21, L22, and L23 that overlap the region AR11. The fuel economy determination component 74 determines the fuel economy to be poor in a state of operating in the portions of the lines L21, L22, and L23 that do not overlap the region AR11.

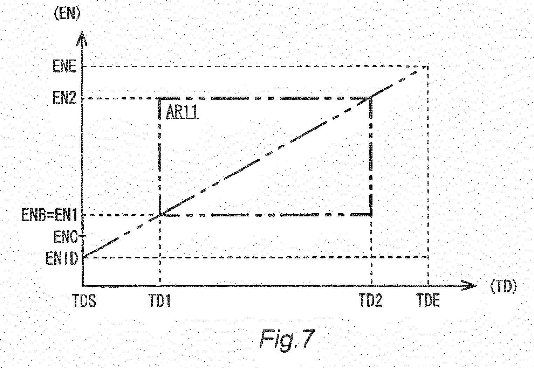

FIG. 7 is a graph of the relation between the throttle opening TD, the engine speed EN, and fuel economy, as recorded to the fuel economy determination criteria data DE1, and the relation to the base engine speed ENB, as recorded to then engine speed determination criteria data DE2. As discussed above, the preset base engine speed ENB is stored in the engine speed determination criteria data DE2. As shown in FIG. 7, in this embodiment the base engine speed ENB is set to be equal to the engine speed EN1. The engine speed EN1 is the lowest engine speed EN out of the engine speeds EN in the region AR11 in which fuel economy is determined to be good, in the fuel economy determination criteria data DE1.

The base engine speed ENB is not limited to the value set in this embodiment. The base engine speed ENB may be any specific engine speed EN that is higher than the idle speed ENID. Also, the base engine speed ENB is preferably set to an engine speed EN that is higher than the clutch engagement speed ENC. For example, the base engine speed ENB may be set so that clutch engagement speed ENC < base engine speed ENB < engine speed EN1.

### Reporting Determination Flow

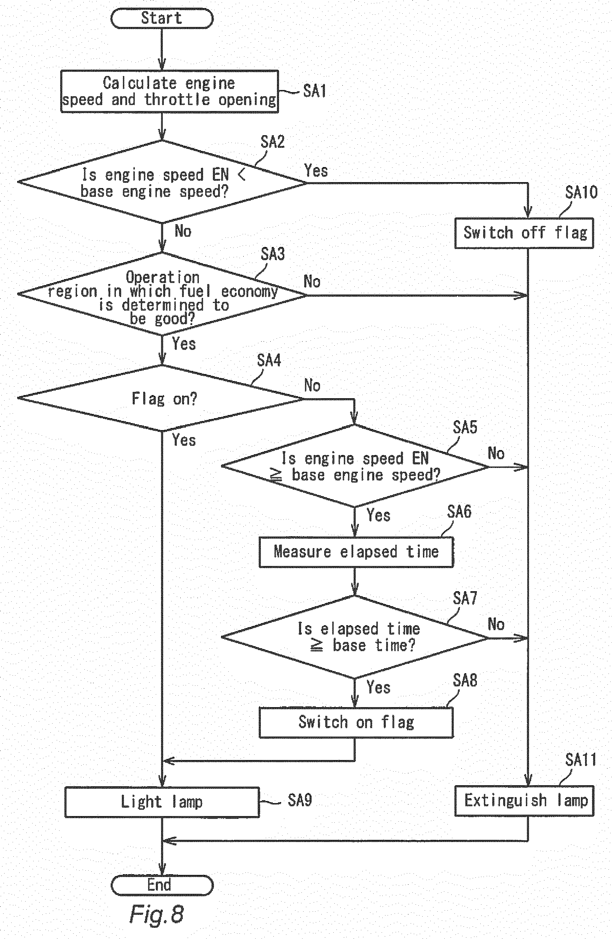

FIG. 8 is a flowchart of controlling the reporting component 62. The flow of reporting information related to fuel economy by the lamp (the reporting component 62) will be described through reference to FIG. 8.

When the reporting determination flow shown in FIG. 8 starts (Start), first, in step SA1, the engine controller 60 computes the engine speed EN on the basis of the sensing signal from the crank angle sensor 451. The engine controller 60 also computes the opening angle (throttle opening TD) of the throttle valve 483 on the basis of the sensing signal from the throttle opening sensor 484.

Next, in step SA2, the engine controller 60 determines whether or not the engine speed EN is lower than the base engine speed ENB. This step involves processing that is required for switching off the flag when the engine speed exceeds the base engine speed ENB and then drops below the base engine speed ENB. What happens if the answer is Yes in this step will be discussed below. If it is immediately after the starting of the engine, the answer in this step SA2 is No.

In step SA3 it is determined whether or not the first condition is met. The fuel economy determination component 74 refers to the fuel economy determination criteria data DE1 and determines whether or not the fuel economy of the engine 41 is good on the basis of the computed throttle opening TD and engine speed EN. More specifically, if the computed throttle opening TD and engine speed EN are included in the region AR11 of the map set by the fuel economy determination criteria data DE1, the fuel economy is determined to be good. If the computed throttle opening TD and engine speed EN are not included in the region AR11 of the map set by the fuel economy determination criteria data DE1, the fuel economy is determined to be poor.

In step SA3, if the fuel economy is determined to be poor (No), the flow proceeds to step SA11. The flow ends here (End) in a state in which the lamp has been extinguished.

In step SA3, if the fuel economy is determined to be (Yes), the flow proceeds to step SA4.

In step SA4, it is determined whether or not the flag is on. In the initial state immediately after the starting of the engine, the answer in step SA4 is No.

From step SA5 to step SA7, it is determined whether or not the second condition is met. First, in step SA5, the engine speed determination component 66 refers to the engine speed determination criteria data DE2 and determines whether or not the engine speed EN is at least the base engine speed ENB.

In step SA5, if the engine speed EN is determined to be less than the base engine speed ENB (No), the flow proceeds to step SA11. After the flow has proceeded to step SA11, the flow ends (End) in a state in which the lamp has been extinguished.

In step SA5, if the engine speed EN is determined to be at least the base engine speed ENB (Yes), the flow proceeds to step SA6.

In step SA6, the timer component 68 measures the elapsed time since it was determined by the engine speed determination component 66 that the engine speed EN was at least the base engine speed ENB. In other words, the timer component 68 measures how long the engine speed EN has been maintained at least the base engine speed ENB since it was determined by the engine speed determination component 66 that the engine speed EN was at least the base engine speed ENB.

In step SA7, the time determination component 70 refers to the time determination criteria data DE3 and determines whether or not the time measured by the timer component 68 has exceeded the base time TB. More specifically, in this embodiment, since the base time TB is set to two seconds, it is determined whether or not the time measured by the timer component 68 has exceeded two seconds, which is the base time TB.

In step SA7, if the time measured by the timer component 68 is not determined to have exceeded the base time TB (No), the flow proceeds to step SA11. After the flow has proceeded to step SA11, the flow ends (End) in a state in which the lamp has been extinguished.

In step SA7, if the time measured by the timer component 68 is determined to have exceeded the base time TB (Yes), the flow proceeds to step SA8. In step SA8, the flag is switched on. Then, in step SA9, the reporting controller 72 puts the lamp (the reporting component 62) in a lit state, and this flow is ended (End).

If the flow is started in a state in which the lamp is lit, the flow proceeds to step SA2 after step SA1. If the determination is Yes in step SA2, that is, if it is determined that the engine speed EN is lower than the base engine speed ENB, the flow proceeds to step SA10 and the flag is switched off. After this, the flow proceeds to step SA11, the lamp is extinguished, and the flow is ended (End).

If the determination is No in step SA2, that is, if it is determined that the engine speed EN is higher than the base engine speed ENB, the flow proceeds to step SA3 and the same determination as above is made. If the determination is Yes in step SA3, the flow proceeds to step SA4. If the flag is on in step SA4, the flow proceeds to step SA9 without going through the processing of steps SA5 to SA8, and the flow is ended while the lamp is still lit (End).

### Effect of Embodiment 1

With the motorcycle 10 in this embodiment, even when the fuel economy determination component 74 determines the fuel economy to be good, the reporting controller 72 does not light the lamp (the reporting component 62) if the elapsed time since the engine speed EN went over the base engine speed ENB does not exceed two seconds (the base time TB). For example, if the rider continuously opens and closes the throttle in heavy traffic or while stopped, the engine speed EN and the throttle opening TD may fall within the region AR11 so that the fuel economy is temporarily determined to be good. However, if the elapsed time since the engine speed EN went over the base engine speed ENB has not exceeded two seconds (the base time TB), the lamp will not be lit even though the fuel economy is determined to be good. Accordingly, when the fuel economy is determined to be good, false reports by the lamp will be suppressed in a state in which the fuel economy is not in fact good, which means that better reporting can be achieved.

With the motorcycle 10 in this embodiment, if the elapsed time since the engine speed EN went over the base engine speed ENB has exceeded the base time TB, and the fuel economy determination component 74 has determined the fuel economy to be good, then the reporting controller 72 lights the lamp (the reporting component 62). Accordingly, this suppresses false reporting in which the lamp is lit in a state in which the fuel economy is not good. Also, the lamp can be lit in a state in which the base time TB has been exceeded and the fuel economy is good.

With the motorcycle 10 in this embodiment, the reporting controller 72 does not light the lamp if it is determined that the fuel economy is not good. Accordingly, the lamp can be extinguished when there is a change from a state of good fuel economy to a state or poor fuel economy, for example.

With the motorcycle 10 in this embodiment, lighting of the lamp in a state in which the fuel economy is not good is limited by using the base engine speed ENB and the base time TB, and without using information related to vehicle speed. Therefore, even if no vehicle speed sensor is provided, there will be less false reporting by the lamp, and better reporting can be achieved. Also, eliminating the vehicle speed sensor reduces the weight and cost of the motorcycle 10.

With the motorcycle 10 in this embodiment, the base engine speed ENB is the same as the lowest engine speed EN1 out of the engine speeds EN for which fuel economy is determined to be good. That is, the lamp is lit when the time since the attainment of a state in which the fuel economy of the engine 41 is good (a state in which the engine speed EN and the throttle opening TD are within the region AR11) has exceeded the base time TB. In other words, the lamp is lit when a state in which the fuel economy of the engine 41 is good has been maintained for at least the base time TB. Therefore, false reports by the lamp are suppressed, and better reporting is possible.

With the motorcycle 10 in this embodiment, the base engine speed ENB is set to at least the clutch engagement speed ENC. That is, when a state in which the clutch transmits the rotation of the engine 41 to the rear wheel so that travel is possible has been maintained for at least the base time TB, the reporting controller 72 causes the reporting component 62 to give a report. Therefore, false reports by the lamp are suppressed, and better reporting is possible.

With the motorcycle 10 in this embodiment, the base time TB is set to two seconds. When the rider continuously opens and closes the throttle in heavy traffic or when stopped, it is rare for the base engine speed ENB to be maintained for more than one second. Therefore, it is less likely that a false report will be given by the reporting component 62 in a state in which the fuel economy is not good. On the other hand, even when actually traveling in a state of good fuel economy, the lamp is not lit until the base time TB has elapsed. If the base time TB is set to be longer than five seconds, the lamp will not be lit even though the motorcycle is actually traveling in a state of good fuel economy. Setting the base time TB to two seconds allows the lamp to be lit at a timing that is not too late when the motorcycle is actually traveling in a state of good fuel economy, while false reports by the lamp are suppressed.

With the motorcycle 10 in this embodiment, the throttle opening TD is used when the fuel economy determination component 74 determines whether or not the fuel economy is good. That is, whether or not to light the lamp is determined on the basis of the engine speed EN and the amount of throttle operation performed by the user. Therefore, whether to light the lamp can be determined directly on the basis of user operation.

### Embodiment 2

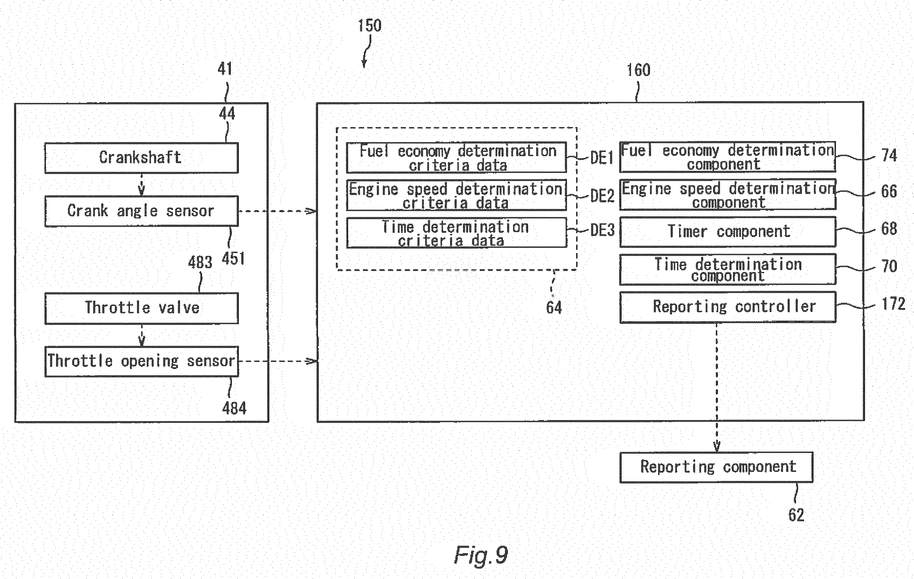

FIG. 9 is a simplified diagram of an engine control system 150 pertaining to Embodiment 2. The motorcycle 110 in Embodiment 2 differs from Embodiment 1 in that a reporting controller 172 determines whether or not a first condition is met when a second condition has been met. In the following description, components that are the same as in Embodiment 1 will be numbered the same and will not be described again, and only those components that are different from Embodiment 1 will be described.

An engine controller 160 in this embodiment comprises the reporting controller 172. The reporting controller 172 is similar to the reporting controller 72 in Embodiment 1 in that it performs control to switch the lamp (the reporting component 62) on or off. The reporting controller 172 lights the lamp (the reporting component 62) when specific conditions have been met. These specific conditions include a first condition and a second condition, just as in Embodiment 1. The first condition is met when the fuel economy determination component 74 determines that the fuel economy is good. The second condition is met when the time determination component 70 determines that the elapsed time since the engine speed EN went over the base engine speed ENB has exceeded the base time TB.

The reporting controller 172 determines whether or not the first and second conditions are met. The reporting controller 172 determines that the first condition is met only when the second condition has been met. The reporting controller 172 does not light the lamp if the second condition is not met. Nor does the reporting controller 172 light the lamp if the first condition is not met, even though the second condition is met. The reporting controller 172 does light the lamp if the second condition is met and the first condition is also met. Also, even though the lamp is lit when the first and second conditions have been temporarily met, the reporting controller 172 will extinguish the lamp if the first condition or the second condition is no longer being met.

### Reporting Determination Flow

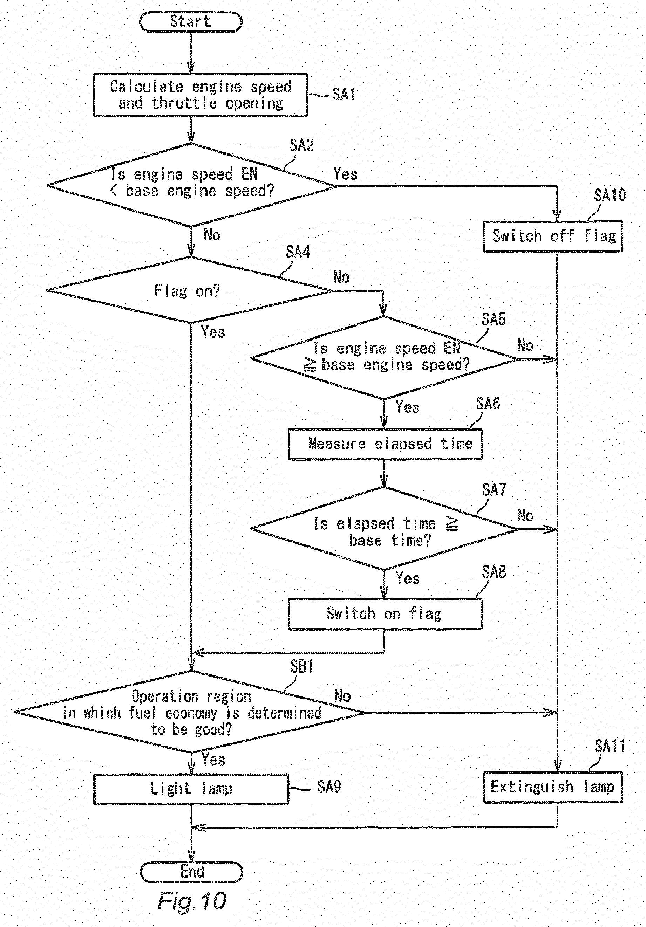

FIG. 10 is a flowchart of controlling the reporting component 62 in the motorcycle 110 pertaining to Embodiment 2. The flow of reporting information related to fuel economy by the lamp (the reporting component 62) will be described through reference to FIG. 10.

The steps shown in FIG. 10 are numbered the same as the same steps in FIG. 8, and will not be described again. In the flow in FIG. 8, the second condition was evaluated (steps SA4 to SA7) after the evaluation of the first condition (step SA3), whereas in the reporting determination flow in FIG. 10, the evaluation of the first condition (SB1) comes after the evaluation of the second condition (steps SA4 to SA7). Specifically, after step SA2, the second condition is evaluated in steps SA4 to SA7, and if the second condition is met (Yes in step SA4 or Yes in step SA7), the flow proceeds to step SB1 and the first condition is evaluated. If the answer is Yes in step SB1, the flow proceeds to step SA9, and processing is ended in a state in which the lamp is lit (End). If the answer is No in step SB1, the flow proceeds to step SA11, and processing is ended in a state in which the lamp is extinguished (End).

### Effect of Embodiment 2

With the motorcycle 110 in this embodiment, if the time since the engine speed EN went over the base engine speed ENB has not exceeded two seconds (the base time TB), the fuel economy determination component 74 does not determine whether or not the fuel economy is good, and the reporting controller 172 does not light the lamp. There are situations in which rider continuously opens and closes the throttle in heavy traffic or while stopped, for example. However, the lamp is not lit if the time since the engine speed EN went over the base engine speed ENB has not exceeded the base time TB. Therefore, false reports by the lamp in a state in which the fuel economy is not good will be suppressed, and better reporting will be possible.

### Embodiment 3

The motorcycle 210 in Embodiment 3 differs from the motorcycle 10 in Embodiment 1 in that it is determined whether or not the time since the fuel economy determination component 74 determined the fuel economy to be good has exceeded a specific continuance time CT. In the following description, components that are the same as in Embodiment 1 will be numbered the same and will not be described again, and only those components that are different from Embodiment 1 will be described.

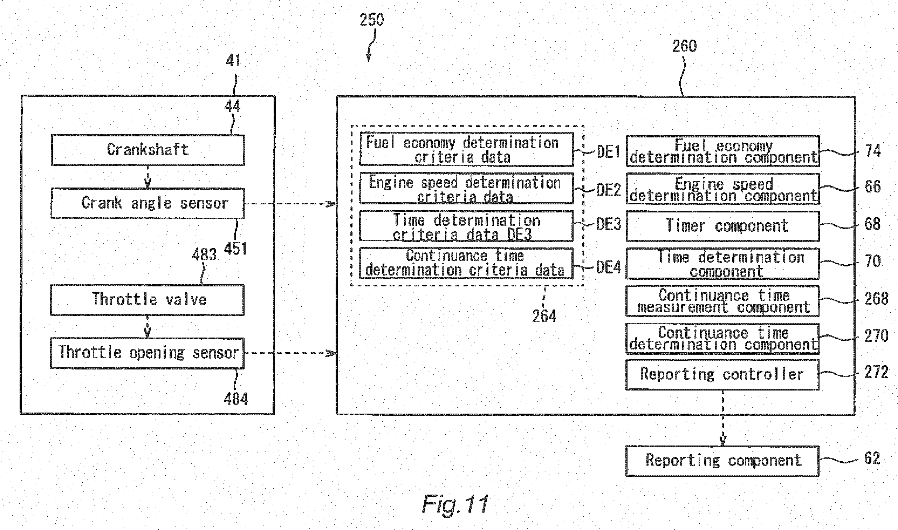

FIG. 11 is a simplified diagram of an engine control system 250 pertaining to the motorcycle 210 pertaining to Embodiment 3. The engine control system 250 comprises the engine 41, an engine controller 260, the crank angle sensor 451, the throttle opening sensor 484, and the reporting component 62.

The engine controller 260 comprises a memory 264, the fuel economy determination component 74, the engine speed determination component 66, the timer component 68, the time determination component 70, a continuance time measurement component 268, and a reporting controller 272.

The memory 264 stores determination criteria related to reporting done by the reporting component 62. The determination criteria include fuel economy determination criteria data DE1, engine speed determination criteria data DE2, time determination criteria data DE3, and continuance time determination criteria data DE4. The continuance time determination criteria data DE4 stores the continuance time CT (a specific length of time). The continuance time CT is set, for example, to a specific length of time between 50 milliseconds (0.05 second) and 300 milliseconds (0.3 second). In this embodiment, the continuance time CT is set to 150 milliseconds (0.15 second).

The continuance time measurement component 268 measures the elapsed time since the fuel economy determination component 74 determined that the fuel economy of the engine 41 is good.

A continuance time determination component 270 refers to the continuance time determination criteria data DE4 stored in the memory 264, and determines whether or not the elapsed time measured by the continuance time measurement component 268 has exceeded the continuance time CT.

The reporting controller 272 performs control so that the lamp (the reporting component 62) is in a lit state or an unlit state. The reporting controller 272 lights the lamp (the reporting component 62) if it is determined that specific conditions have been met. These specific conditions include a first condition, a second condition, and a third condition. The first condition is met when the fuel economy determination component 74 has determined that the fuel economy is good. The second condition is met when the elapsed time since the engine speed EN went over the base engine speed ENB is determined by the time determination component 70 to have exceeded the base time TB. The third condition is met when the continuance time determination component 270 has determined that the elapsed time since the fuel economy of the engine 41 was determined to be good has exceeded the continuance time CT.

The reporting controller 272 in this embodiment determines whether or not the first, second, and third conditions are met. The reporting controller 272 does not light the lamp if the first condition has not been met. The reporting controller 272 does not light the lamp if the third condition has not been met, even though the first condition has been met. The reporting controller 272 does not light the lamp if the second condition has not been met, even though the first and third conditions have been met. The reporting controller 272 does light the lamp if the first condition, the third condition, and the second condition have all been met. Even if the lamp is lit because the first, second, and third conditions are first met, the reporting controller 272 will extinguish the lamp if either the first condition, the second condition, or the third condition is no longer being met.

### Reporting Determination Flow

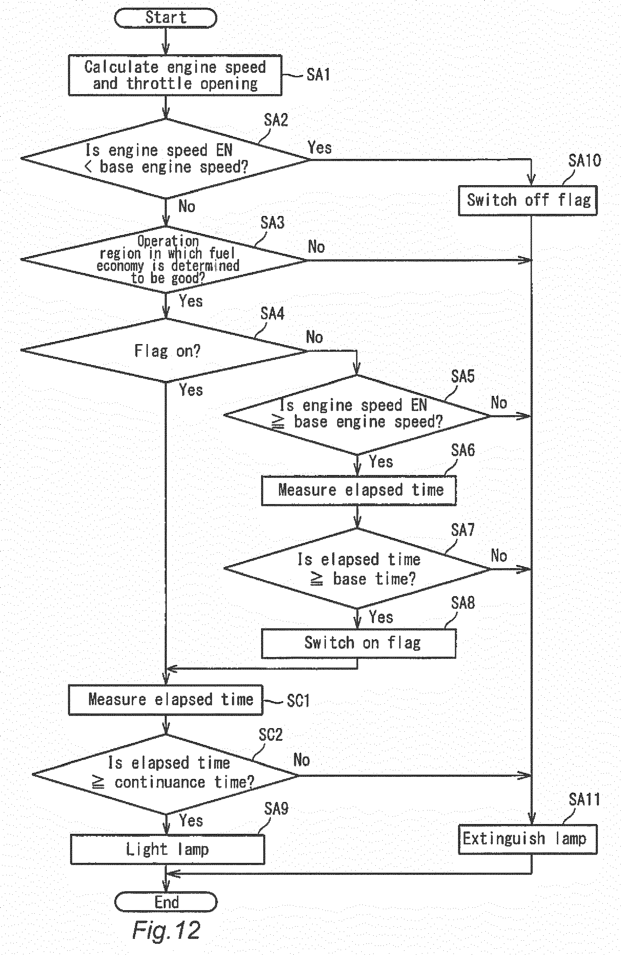

FIG. 12 is a flowchart of controlling the reporting component 62 in the motorcycle 210 pertaining to Embodiment 3. The flow of reporting information related to fuel economy by the lamp (the reporting component 62) will be described through reference to FIG. 12. The steps shown in FIG. 12 are numbered the same as the same steps in FIG. 8, and will not be described again.

At the start of the reporting determination flow shown in FIG. 12 (Start), the first condition is evaluated in step SA3 via steps SA1 and SA2.

Also, the second condition is evaluated in steps SA5 to SA7.

If the answer is Yes in step SA7, the flag is switched on in step SA8 and the flow proceeds to step SC1.

In step SC1, the continuance time measurement component 268 measures the elapsed time since the fuel economy determination component 74 determined the fuel economy of the engine 41 to be good. In other words, the continuance time measurement component 268 measures how long a state in which the fuel economy of the engine 41 is good has been maintained since the fuel economy determination component 74 determined the fuel economy of the engine 41 to be good.

In step SC2, the continuance time determination component 270 refers to the continuance time determination criteria data DE4 and determines whether or not the time measured by the continuance time measurement component 268 has exceeded the continuance time CT. More specifically, in this embodiment, since the continuance time CT is set to 150 milliseconds (0.15 second), it is determined whether or not the time measured by the continuance time measurement component 268 has exceeded 150 milliseconds (0.15 second), which is the continuance time CT.

In step SC2, if it is determined that the time measured by the continuance time measurement component 268 has exceeded the continuance time CT (Yes), the flow proceeds to step SA9. The reporting controller 272 performs control to put the lamp (the reporting component 62) in a lit state, and this flow is ended (End).

When the flow is started in a state in which the lamp is lit, the flow proceeds to step SA2 after step SA1. If the determination is Yes in step SA2, that is, if it is determined that the engine speed EN is lower than the base engine speed ENB, the flow proceeds to step SA10 and the flag is switched off. After this, the flow proceeds to step SA11, the lamp is extinguished, and the flow is ended (End).

If the determination is No in step SA2, that is, if it is determined that the engine speed EN is higher than the base engine speed ENB, the flow proceeds to step SA3 and the same determination as above is made. If the determination is Yes in step SA3, the flow proceeds to step SA4. If the flag is on in step SA4, the flow proceeds to step SC1 without going through the processing of steps SA5 to SA8, and the time is measured just as above. If the determination is Yes in step SC2, the flow proceeds to step SA9 and the flow is ended while the lamp is still lit (End). If the determination is No in step SC2, the flow proceeds to step SA11, the lamp is extinguished, and the flow is ended (End).

### Effect of Embodiment 3

With the motorcycle 210 in this embodiment, a specific continuance time CT is set, and the lamp (the reporting component 62) is lit on the condition that the time since determining the fuel economy to be good has exceeded the continuance time CT. That is, the lamp is lit when a state in which the fuel economy has been determined to be good has been maintained for at least the length of the continuance time CT. Therefore, false reports by the lamp are suppressed, and better reporting is possible.

### Embodiment 4

The motorcycle 410 in this embodiment differs from the motorcycle 210 in Embodiment 3 in that a plurality of continuance times CT (a specific length of time) are set, and different continuance times CT are set according to the throttle opening. In the following description, components that are the same as in Embodiment 3 will be numbered the same and will not be described again, and only those components that are different from Embodiment 3 will be described.

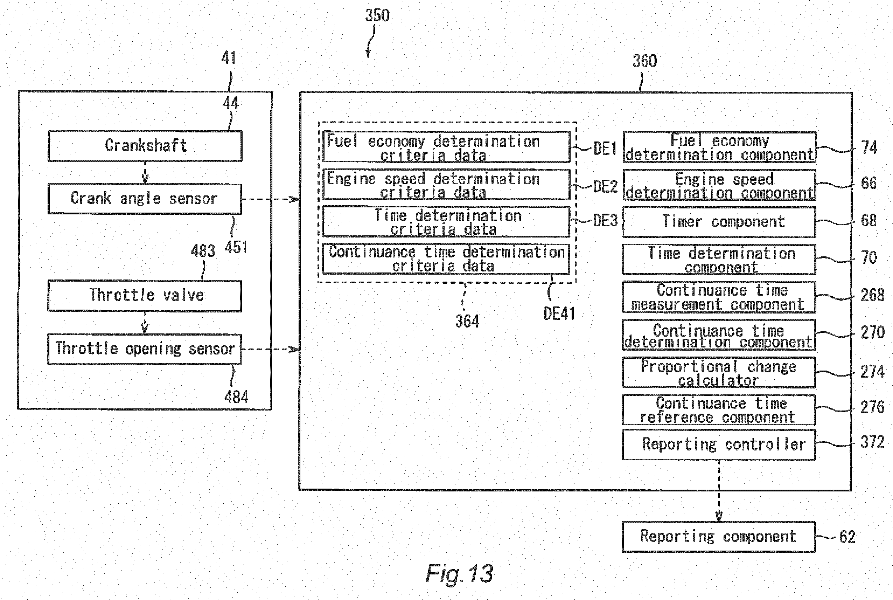

FIG. 13 is a simplified diagram of an engine control system 350 of a motorcycle 310 pertaining to Embodiment 4. The engine control system 350 comprises the engine 41, an engine controller 360, the crank angle sensor 451, the throttle opening sensor 484, and the reporting component 62.

The engine controller 360 comprises a memory 364, the fuel economy determination component 74, the engine speed determination component 66, the timer component 68, the time determination component 70, the continuance time measurement component 268, the continuance time determination component 270, a continuance time reference component 276, and a reporting controller 372.

The memory 364 stores determination criteria related to reporting done by the reporting component 62. The determination criteria include fuel economy determination criteria data DE1, engine speed determination criteria data DE2, time determination criteria data DE3, and continuance time determination criteria data DE41. The continuance time determination criteria data DE41 stores a plurality of the continuance times CT (a specific length of time). In this embodiment, a first continuance time CT1 and a second continuance time CT2 are stored as the continuance times CT.

The first continuance time CT1 and the second continuance time CT2 (the plurality of continuance times CT) are set according to the throttle opening. The first continuance time CT1 is a continuance time CT corresponding to when the throttle opening is small (such as 0.5° or less). The second continuance time CT2 is a continuance time CT corresponding to when the throttle opening is large (such as 0.6° or more). The continuance time CT is preferably set to a shorter time than the second continuance time CT2. In this embodiment, the first continuance time CT1 is set to 100 milliseconds (0.1 second). The second continuance time CT2 is set to 200 milliseconds (0.2 second).

The continuance time reference component 276 refers to the continuance time determination criteria data DE41 and selects one of the plurality of continuance times CT (CT1 or CT2). More specifically, if the throttle opening is 0.5° or less, the continuance time reference component 276 selects the continuance time CT, and if the throttle opening is 0.6° or more, the continuance time reference component 276 selects the second continuance time CT2.

The continuance time measurement component 268 measures the elapsed time since the fuel economy determination component 74 determined the fuel economy of the engine 41 to be good.

The continuance time determination component 270 determines whether or not the time measured by the continuance time measurement component 268 has exceeded the first continuance time CT1 or the second continuance time CT2 selected by the continuance time reference component 276.

The reporting controller 372 performs control to put the lamp (the reporting component 62) in a lit or unlit state.

### Reporting Determination Flow

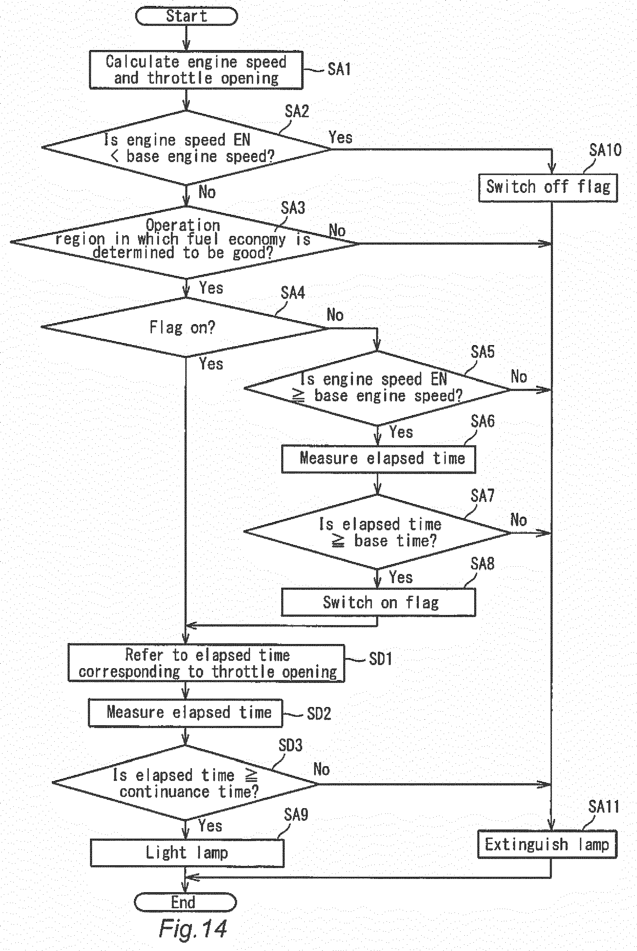

FIG. 14 is a flowchart of controlling a reporting component in a motorcycle pertaining to Embodiment 4. The flow of reporting information related to fuel economy by the lamp (the reporting component 62) will be described through reference to FIG. 14. The steps shown in FIG. 14 are numbered the same as the same steps in FIG. 8, and will not be described again.

At the start of the reporting determination flow shown in FIG. 14 (Start), the first condition is evaluated in step SA3 via steps SA1 and SA2.

Also, the second condition is evaluated in steps SA5 to SA7.

If the answer is Yes in step SA7, the flag is switched on in step SA8 and the flow proceeds to step SD1.

In step SD1, the continuance time reference component 276 refers to the continuance time determination criteria data DE41 and selects one of the plurality of continuance times CT (CT1 or CT2). More specifically, the continuance time reference component 276 selects the first continuance time CT1 if the throttle opening is 0.5° or less, and selects the second continuance time CT2 if the throttle opening is 0.6° or more.

In step SD2, the continuance time measurement component 268 measures the elapsed time since the fuel economy determination component 74 determined the fuel economy of the engine 41 to be good. In step SD3, if the time measured by the continuance time measurement component 268 is determined to have exceeded the continuance time CT (CT1 or CT2) selected in step SD1 (Yes), the flow proceeds to step SA9. In step SA9, the reporting controller 372 performs control to put the lamp (the reporting component 62) in its lit state, and ends this flow (End).

When the flow is started in a state in which the lamp is lit, the flow proceeds to step SA2 after step SA1. If the determination is Yes in step SA2, that is, if it is determined that the engine speed EN is lower than the base engine speed ENB, the flow proceeds to step SA10 and the flag is switched off. After this, the flow proceeds to step SA11, the lamp is extinguished, and the flow is ended (End).

If the determination is No in step SA2, that is, if it is determined that the engine speed EN is higher than the base engine speed ENB, the flow proceeds to step SA3 and the same determination as above is made. If the determination is Yes in step SA3, the flow proceeds to step SA4. If the flag is on in step SA4, the flow proceeds to step SD1 without going through the processing of steps SA5 to SA8, and the time is measured just as above. If the determination is Yes in step SD3, the flow proceeds to step SA9 and the flow is ended while the lamp is still lit (End). If the determination is No in step SD3, the flow proceeds to step SA11, the lamp is extinguished, and the flow is ended (End).

### Effect of Embodiment 4

With the motorcycle 310 in this embodiment, a plurality of continuance times CT are provided corresponding to the proportional change in the engine speed EN. The engine controller 360 lights the lamp (the reporting component 62), including the determination result as to whether or not the continuance time CT was reached. Accordingly, the timing of the report given by the reporting component 62 can be varied according to a proportional change in the engine speed EN, and the lighting and extinguishing of the lamp can be controlled more precisely according to the operation pattern.

With the motorcycle 310 in this embodiment, the continuance time CT is such that a continuance time CT corresponding to when the proportional change in the engine speed EN is negative is smaller than a continuance time CT corresponding to when the proportional change in the engine speed EN is positive. Accordingly, the timing at which the lamp (the reporting component 62) is lit is sooner during deceleration than during acceleration or cruising, allowing better reporting of a state in which the fuel economy is good.

Also, with the motorcycle 310 in this embodiment, the lamp can be lit sooner when the rider decreases the throttle opening to change from acceleration or cruising to deceleration. Accordingly, the lamp can be lit sooner when there is a change from acceleration to cruising, and the lighting timing can be controlled more precisely to suit the perception of the rider.

### Other Embodiments

For instance, the lamp (the reporting component 62) reported information related to the fuel economy of the engine 41 by being either lit or extinguished, but this is not the only option. Information related to fuel economy may be reported by some operation other than lighting or extinguishing a lamp, such as from the number of lamps that are lit, or a change in color. Also, the reporting component 62 may be something other than a lamp. For instance, information related to the fuel economy of the engine 41 may be displayed on a display.

The condition for switching off the flag was set to when the sensed engine speed went under a base engine speed, but the base engine speed when this flag is switched off may be set lower than the base engine speed when the flag is on.

No continuance time was provided when the flag was switched off, but one may be provided. In this case, the length of the continuance time may be made different from that when the flag is on.

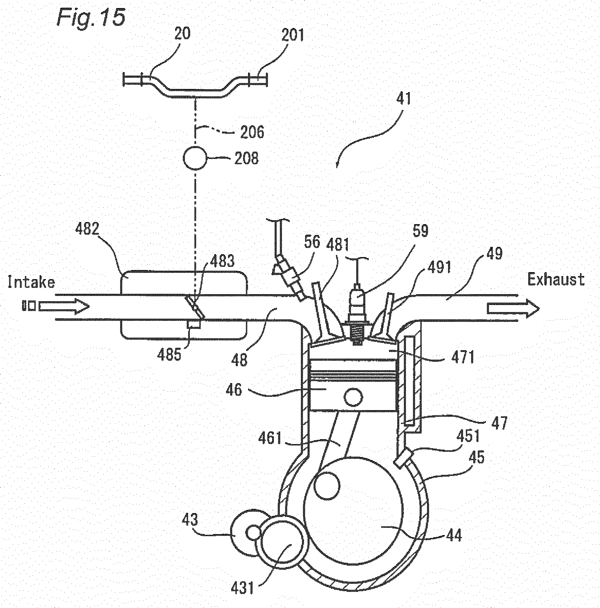

In the embodiments given above, the throttle opening sensor 484 was used as the intake information sensor of the present teaching, and the throttle opening TD was used as the intake information, but this is not the only option. For example, the intake pressure sensor 485 may be used as the intake information sensor, and the intake pressure information sensed by the intake pressure sensor 485 may be used as the intake information. FIG. 15 is a simplified diagram of an engine. The intake pressure sensor 485 is provided to the throttle body 482. The intake pressure sensor 485 can calculate the intake volume of the engine 41 on the basis of the intake pressure information sensed by the intake pressure sensor 485. For evaluation of reporting, the throttle opening sensed by the throttle opening sensor 484 and used in the above embodiments may be replaced by the intake pressure sensed by the intake pressure sensor 485. In this case, whether or not the fuel economy is good can be directly determined on the basis of the actual state of the engine 41.

In these embodiments, the fuel economy determination criteria data DE1 was a map that associated the throttle opening TD, the engine speed EN, and whether or not the fuel economy was good, but this is not the only option. For example, rather than a map, a range of numerical values for determining whether or not the fuel economy is good may be used. For instance, the fuel economy may be determined to be good if TD1 ≤ throttle opening TD s TD2 and EN1 ≤ engine speed EN ≤ EN2 are both satisfied.

In Embodiment 4, two continuance times CT were set in the continuance time determination criteria data DE41, but three or more continuance times CT may be set instead.

In the above embodiments, an example of applying the present teaching to a scooter type of motorcycle was described, but it may also be applied to a sports type or an underbone type.

### REFERENCE SIGNS LIST

- 10: motorcycle
- 41: engine
- 60: engine controller
- 62: reporting component
- 70: time determination component
- 451: crank angle sensor
- 483: throttle valve
- 484: throttle opening sensor

## Claims

1. A straddle-type vehicle, comprising:
an engine (41);
an intake volume adjuster (483) adapted for increasing or decreasing an intake volume of the engine (41);
an intake information sensor (484,485) adapted for sensing intake information related to the intake volume of the engine (41) adjusted by the intake volume adjuster (483);
an engine speed sensor (451) adapted for sensing a speed of the engine (41);
a reporting component (62) adapted for reporting information related to a fuel economy of the engine (41); and
a controller (60,72;160,172;260,272;360,372) adapted for determining whether or not the fuel economy is good on the basis of the intake information sensed by the intake information sensor (484,485) and the engine speed sensed by the engine speed sensor (451), and also adapted for causing the reporting component (62) to give a report on the condition that the fuel economy is determined to be good,
wherein the controller (60,72;160,172;260,272;360,372) further includes a time determination component (70) adapted for using a specific engine speed that is higher than a preset idle speed as a base engine speed, and adapted for determining whether or not an elapsed time since the engine speed sensed by the engine speed sensor (451) went over this base engine speed has exceeded a preset base time, and
the controller (60,72;160,172;260,272;360,372) adapted to not cause the reporting component (62) to give a report indicating good fuel economy if the time determination component (70) has not determined that the elapsed time since the engine speed sensed by the engine speed sensor (451) went over the base engine speed has exceeded the base time, even though the fuel economy has been determined to be good on the basis of the intake information sensed by the intake information sensor (484,485) and the engine speed sensed by the engine speed sensor (451).

2. A straddle-type vehicle according to claim 1, wherein the controller (60,72;160,172;260,272;360,372) adapted to not cause the reporting component (62) to give a report if the time determination component (70) has determined that the elapsed time has not exceeded the base time, even though the fuel economy has been determined to be good on the basis of the intake information sensed by the intake information sensor (484,485) and the engine speed sensed by the engine speed sensor (451).

3. A straddle-type vehicle according to claim 1 or 2, wherein the controller (60,72;160,172;260,272;360,372) adapted for causing the reporting component (62) to give a report if the time determination component (70) has determined that the elapsed time has exceeded the base time, and if the fuel economy has been determined to be good on the basis of the intake information sensed by the intake information sensor (484,485) and the engine speed sensed by the engine speed sensor (451).

4. A straddle-type vehicle according to any of claims 1 to 3, wherein the controller (60,72;160,172;260,272;360,372) adapted to not cause the reporting component (62) to give a report if the fuel economy is determined to be bad on the basis of the intake information sensed by the intake information sensor (484,485) and the engine speed sensed by the engine speed sensor (451).

5. A straddle-type vehicle according to any of claims 1 to 4, wherein said vehicle has no vehicle speed sensor for sensing the vehicle speed.

6. A straddle-type vehicle according to any of claims 1 to 5, wherein the base engine speed is the same as the lowest engine speed out of all engine speeds at which the fuel economy is determined to be good.

7. A straddle-type vehicle according to any of claims 1 to 5, further comprising:
a drive wheel (16) adapted to be driven by the rotation of the engine (41); and
a clutch adapted for automatically switching between transmitting and not transmitting the rotation of the engine (41) to the drive wheel (16) according to an increase or decrease in the engine speed,
wherein the base engine speed is set to be at least the engine speed at which the clutch switches from a state in which the rotation of the engine (41) is not transmitted to the drive wheel (16), to a state in which the rotation of the engine (41) is transmitted to the drive wheel (16).

8. A straddle-type vehicle according to any of claims 1 to 7, wherein the base time is set to a specific value of at least one second and no more than five seconds.

9. A straddle-type vehicle according to any of claims 1 to 8, wherein the intake information is throttle opening information.

10. A straddle-type vehicle according to any of claims 1 to 8, wherein the intake information is intake pressure information.

11. A straddle-type vehicle according to any of claims 1 to 10, wherein a continuance time, which is a specific length of time, is set, and the controller (60,72;160,172;260,272;360,372) is adapted for causing the reporting component (62) to give a report on the condition that this continuance time is exceeded by a time that has elapsed after the fuel economy was determined to be good on the basis of the intake information sensed by the intake information sensor (484,485) and the engine speed sensed by the engine speed sensor (451).

12. A straddle-type vehicle according to claim 11, wherein a plurality of continuance times are set corresponding to a plurality of mutually different sets of intake information, and
the controller (60,72;160,172;260,272;360,372) adapted for causing the reporting component (62) to give a report on the condition that the elapsed time since the fuel economy was determined to be good on the basis of the intake information sensed by the intake information sensor (484,485) and the engine speed sensed by the engine speed sensor (451) has exceeded the continuance time corresponding to the sensed intake information.

13. A straddle-type vehicle according to claim 12, wherein a first continuance time is set for first intake information out of the plurality of sets of intake information, and a second continuance time that is longer than the first continuance time is set for second intake information that is larger in volume than the first intake information.

14. A method for controlling a straddle-type vehicle comprising an engine (41) and an intake volume adjuster (483) adapted for increasing or decreasing the intake volume of the engine (41), the method comprises:
sensing intake information related to the intake volume of the engine (41) adjusted by the intake volume adjuster (483);
sensing a speed of the engine (41);
reporting information related to a fuel economy of the engine (41); and
determining whether or not the fuel economy is good on the basis of the sensed intake information and the sensed engine speed, and also causing to give a report on the condition that the fuel economy is determined to be good,
using a specific engine speed that is higher than a preset idle speed as a base engine speed, and determining whether or not an elapsed time since the sensed engine speed went over this base engine speed has exceeded a preset base time, and
not causing to give a report if it was not determined that the elapsed time since the sensed engine speed went over the base engine speed has exceeded the base time, even though the fuel economy has been determined to be good on the basis of the sensed intake information and the sensed engine speed.

15. A method for controlling a straddle-type vehicle according to claim 14, further comprising: not causing to give a report if it was determined that the elapsed time has not exceeded the base time, and if the fuel economy has been determined to be good on the basis of the sensed intake information and the sensed engine speed.

## Patentansprüche

1. Ein Spreiz-Sitz-Typ-Fahrzeug, das umfasst:
einen Motor (41);
einen Einlass-Volumen-Einsteller (483), der angepasst ist zum Erhöhen oder Verringern eines Einlass-Volumens des Motors (41);
einen Einlass-Informations-Sensor (484, 485), der angepasst ist um Einlass-Informationen bezüglich des Einlass-Volumens des Motors (41), eingestellt durch den Einlass-Volumen-Einsteller (483), zu erfassen;
einen Motor-Geschwindigkeits-Sensor (451), der angepasst ist, um eine Geschwindigkeit des Motors (41) zu erfassen;
eine Berichts-Komponente (62), die angepasst ist, um Informationen bezüglich einer Kraft-Stoff-Ökonomie des Motors (41) zu berichten; und
eine Steuerung (60, 72; 160, 172; 260, 272; 360, 372), die angepasst ist um zu bestimmen, ob oder nicht die Kraft-Stoff-Ökonomie gut ist, auf der Grundlage der Einlass-Informationen, erfasst durch den Einlass-Informations-Sensor (484, 485), und der Motor-Geschwindigkeit, erfasst durch den Motor-Geschwindigkeits-Sensor (451), und ebenso angepasst um die Berichts-Komponente (62) zu veranlassen, einen Bericht zu der Bedingung, dass die Kraft-Stoff-Ökonomie als gut erfasst ist, zu geben, wobei die Steuerung (60, 72; 160, 172; 260, 272; 360, 372) weiter beinhaltet eine Zeit-Bestimmungs-Komponente (70), die angepasst ist, eine spezielle Motor-Geschwindigkeit, die höher als eine vorgegebene Leerlauf-Geschwindigkeit ist, als eine Basis-Motor-Geschwindigkeit zu verwenden, und angepasst ist, zum Bestimmen ob oder nicht eine verstrichene Zeit seit der die Motor-Geschwindigkeit, erfasst durch den Motor-Geschwindigkeits-Sensor (451), über diese Basis-Motor-Geschwindigkeit hinausgeht, eine vorgegebene Basis-Zeit überschritten hat, und
die Steuerung (60, 72; 160, 172; 260, 272; 360, 372) angepasst ist, um die Berichts-Komponente (62) nicht zu veranlassen einen Bericht zu geben, der gute Kraft-Stoff-Ökonomie anzeigt, wenn die Zeit-Bestimmungs-Komponente (70) nicht bestimmt hat, dass die verstrichene Zeit seit dem die Motor-Geschwindigkeit über die Basis-Motor-Geschwindigkeit hinausgegangen ist, erfasst durch den Motor-Geschwindigkeits-Sensor (451), die Basis-Zeit überschritten hat, auch wenn die Kraft-Stoff-Ökonomie bestimmt worden ist gut zu sein, auf der Grundlage der Einlass-Informationen, erfasst durch den Einlass-Informations-Sensor (484, 485), und der Motor-Geschwindigkeit, erfasst durch den Motor-Geschwindigkeits-Sensor (451).

2. Ein Spreiz-Sitz-Typ-Fahrzeug gemäß Anspruch 1, wobei die Steuerung (60, 72; 160, 172; 260, 272; 360, 372) angepasst ist die Berichts-Komponente (62) nicht zu veranlassen, einen Bericht zu geben, wenn die Zeit-Bestimmungs-Komponente (70) bestimmt hat, dass die verstrichene Zeit die Basis-Zeit nicht überschritten hat, auch wenn die Kraft-Stoff-Ökonomie bestimmt worden ist gut zu sein, auf der Grundlage der Einlass-Information, erfasst durch den Einlass-Informations-Sensor (484, 485), und der Motor-Geschwindigkeit, erfasst durch den Motor-Geschwindigkeits-Sensor (451).

3. Ein Spreiz-Sitz-Typ-Fahrzeug gemäß Anspruch 1 oder 2, wobei die Steuerung (60, 72; 160, 172; 260, 272; 360, 372) angepasst ist die Berichts-Komponente (62) zu veranlassen einen Bericht zu geben, wenn die Zeit-Bestimmungs-Komponente (70) bestimmt hat, dass die verstrichene Zeit die Basis-Zeit überschritten hat, und wenn die Kraft-Stoff-Ökonomie bestimmt worden ist gut zu sein, auf der Grundlage der Einlass-Information, erfasst durch den Einlass-Informations-Sensor (484, 485), und der Motor-Geschwindigkeit, erfasst durch den Motor-Geschwindigkeits-Sensor (451).

4. Ein Spreiz-Sitz-Typ-Fahrzeug gemäß irgendeinem der Ansprüche 1 bis 3, wobei die Steuerung (60, 72; 160, 172; 260, 272; 360, 372) angepasst ist die Berichts-Komponente (62) nicht zu veranlassen einen Bericht zu geben, wenn die Kraft-Stoff-Ökonomie bestimmt ist schlecht zu sein, auf der Grundlage der Einlass-Information, erfasst durch den Einlass-Informations-Sensor (484, 485), und der Motor-Geschwindigkeit, erfasst durch den Motor-Geschwindigkeits-Sensor (451).

5. Ein Spreiz-Sitz-Typ-Fahrzeug gemäß irgendeinem der Ansprüche 1 bis 4, wobei das Fahrzeug keinen Fahrzeug-Geschwindigkeits-Sensor zum Erfassen der FahrzeugGeschwindigkeit hat.

6. Ein Spreiz-Sitz-Typ-Fahrzeug gemäß zu irgendeinem der Ansprüche 1 bis 5, wobei die Basis-Motor-Geschwindigkeit die gleiche ist wie die niedrigste Motor-Geschwindigkeit von allen Motor-Geschwindigkeiten zu denen die Kraft-Stoff-Ökonomie bestimmt ist gut zu sein.

7. Ein Spreiz-Sitz-Typ-Fahrzeug gemäß irgendeinem der Ansprüche 1 bis 5, das weiter umfasst:
ein Antriebs-Rad (16), das angepasst ist, um durch die Drehung des Motors (41) angetrieben zu werden; und
eine Kupplung, die angepasst ist um automatisch zwischen Übertragung und Nicht-Übertragung der Drehung des Motors (41) zu dem Antriebs-Rad (16) zu schalten, gemäß einer Erhöhung oder Verringerung in der Motor-Geschwindigkeit,
wobei die Basis-Motor-Geschwindigkeit gesetzt ist, dass diese zumindest eine Motor-Geschwindigkeit ist, zu der die Kupplung von einem Zustand, in dem die Drehung des Motors (41) nicht zu dem Antriebs-Rad (16) übertragen ist, zu einem Zustand, in dem die Drehung des Motors (41) zu dem Antriebs-Rad (16) übertragen ist, schaltet.

8. Ein Spreiz-Sitz-Typ-Fahrzeug gemäß irgendeinem der Ansprüche 1 bis 7, wobei die Basis-Zeit auf einen speziellen Wert von zumindest einer Sekunde und nicht mehr als fünf Sekunden gesetzt ist.

9. Ein Spreiz-Sitz-Typ-Fahrzeug gemäß zu irgendeinem der Ansprüche 1 bis 8, wobei die Einlass-Informationen eine Drossel-Öffnungs-Information ist.

10. Ein Spreiz-Sitz-Typ-Fahrzeug gemäß zu irgendeinem der Ansprüche 1 bis 8, wobei die Einlass-Information eine Einlass-Druck-Information ist.

11. Ein Spreiz-Sitz-Typ-Fahrzeug gemäß zu irgendeinem der Ansprüche 1 bis 10, wobei eine Fortführungs-Zeit gesetzt ist, die eine spezielle Länge der Zeit ist, und die Steuerung (60, 72; 160, 172; 260, 272; 360, 372) angepasst ist, um die Berichts-Komponente (62) zu veranlassen einen Bericht zu der Bedienung zu geben, dass diese Fortführungs-Zeit überschritten ist, durch eine Zeit, die verstrichen ist, nachdem die Kraft-Stoff-Ökonomie bestimmt worden ist gut zu sein, auf der Grundlage der Einlass-Information, erfasst durch den Einlass-Informations-Sensor (484, 485), und der Motor-Geschwindigkeit, erfasst durch den Motor-Geschwindigkeits-Sensor (451).

12. Ein Spreiz-Sitz-Typ-Fahrzeug gemäß Anspruch 11, wobei eine Mehrzahl von Fortführungs-Zeiten gesetzt sind, entsprechend zu einer Mehrzahl von mehrfachen unterschiedlichen Sätzen von Einlass-Informationen, und die Steuerung (60, 72; 160, 172; 260, 272; 360, 372) angepasst ist, um die Berichts-Komponente (62) zu veranlassen einen Bericht zu der Bedienung zu geben, dass die verstrichene Zeit seit die Kraft-Stoff-Ökonomie bestimmt worden ist gut zu sein, auf der Basis der Einlass-Information, erfasst durch den Einlass-Informations-Sensor (484, 485), und der Motor-Geschwindigkeit, erfasst durch den Motor-Geschwindigkeits-Sensor (451), die Fortführungs-Zeit überschritten hat entsprechend zu der erfassten Einlass-Information.

13. Ein Spreiz-Sitz-Typ-Fahrzeug gemäß Anspruch 12, wobei eine erste Fortführungs-Zeit für eine erste Einlass-Information von der Mehrzahl von Sätzen von Einlass-Informationen gesetzt ist, und eine zweite Fortführungs-Zeit, die länger ist als die erste Fortführungs-Zeit, für eine zweite Einlass-Information, die größer ist im Volumen als die erste Einlass-Information, gesetzt ist.

14. Ein Verfahren zur Steuerung eines Spreiz-Sitz-Typ-Fahrzeugs, das einen Motor (41) und einen Einlass-Volumen-Einsteller (483), der angepasst ist zum Erhöhen oder Verringern eines Einlass-Volumens des Motors (41), umfasst, das Verfahren umfasst:
Erfassen von Einlass-Informationen bezüglich des Einlass-Volumens des Motors (41), eingestellt durch den Einlass-Volumen-Einsteller (483);
Erfassen einer Geschwindigkeit des Motors (41);
Berichten von Informationen bezüglich einer Kraft-Stoff-Ökonomie des Motors (41); und
Bestimmen ob oder nicht die Kraft-Stoff-Ökonomie gut ist, auf der Grundlage der erfassten Einlass-Informationen und der erfassten Motor-Geschwindigkeit, und ebenso Veranlassen, einen Bericht zu der Bedingung, dass die Kraft-Stoff-Ökonomie als gut erfasst ist, zu geben,
Verwenden einer spezielle Motor-Geschwindigkeit, die höher als eine vorgegebene Leerlauf-Geschwindigkeit ist, als eine Basis-Motor-Geschwindigkeit, und Bestimmen ob oder nicht eine verstrichene Zeit seit der die erfasste Motor-Geschwindigkeit über diese Basis-Motor-Geschwindigkeit hinausgeht, eine vorgegebene Basis-Zeit überschritten hat, und
Nicht Veranlassen einen Bericht zu geben, der gute Kraft-Stoff-Ökonomie anzeigt, wenn nicht bestimmt hat, dass die verstrichene Zeit seit dem die erfasste Motor-Geschwindigkeit über die Basis-Motor-Geschwindigkeit hinausgegangen ist, die Basis-Zeit überschritten hat, auch wenn die Kraft-Stoff-Ökonomie bestimmt worden ist gut zu sein, auf der Grundlage der erfassten Einlass-Informationen und der erfassten Motor-Geschwindigkeit.

15. Ein Verfahren zur Steuerung eines Spreiz-Sitz-Typ-Fahrzeugs gemäß Anspruch 14, das weiter umfasst: nicht Veranlassen, einen Bericht zu geben, wenn bestimmt ist, dass die verstrichene Zeit die Basis-Zeit nicht überschritten hat, und wenn die Kraft-Stoff-Ökonomie bestimmt worden ist gut zu sein, auf der Grundlage der erfassten Einlass-Information und der erfassten Motor-Geschwindigkeit.

## Revendications

1. Véhicule à enfourcher comprenant :
un moteur (41) ;
un régulateur de volume d'admission (483) adapté pour augmenter ou diminuer le volume d'admission du moteur (41) ;
un capteur d'information d'admission (484, 485) adapté pour détecter de l'information d'admission relative au volume d'admission du moteur (41) régulé par le régulateur de volume d'admission (483) ;
un capteur de vitesse du moteur (451) adapté pour capter la vitesse du moteur (41) ;
un composant de rapportage (62) adapté pour rapporter de l'information relative à la consommation de carburant du moteur (41) ; et
un contrôleur (60, 72 ; 160, 172 ; 260, 272 ; 360, 372) adapté pour déterminer si la consommation de carburant est faible ou non sur base de l'information d'admission détectée par le capteur d'information d'admission (484, 485) et de la vitesse du moteur détectée par le capteur de vitesse du moteur (451), et adapté pour commander également au composant de rapportage (62) d'établir un rapport à condition que la consommation de carburant soit déterminée comme étant faible,
dans lequel le contrôleur (60, 72 ; 160, 172 ; 260, 272 ; 360, 372) comprend en outre un composant de détermination de temps (70) adapté pour utiliser une vitesse spécifique du moteur qui est supérieure à une vitesse de ralenti prédéterminée comme vitesse de base du moteur, et adapté pour déterminer si un temps écoulé depuis que la vitesse du moteur détectée par le capteur de vitesse du moteur (451) a dépassé cette vitesse de base du moteur a excédé ou non un temps de base prédéterminé, et le contrôleur (60, 72 ; 160, 172 ; 260, 272 ; 360, 372) est adapté pour ne pas commander au composant de rapportage (62) d'établir un rapport indiquant une faible consommation de carburant si le composant de détermination de temps (70) n'a pas déterminé que le temps écoulé depuis que la vitesse du moteur détectée par le capteur de vitesse du moteur (451) a dépassé la vitesse de base du moteur a excédé le temps de base, même si la consommation de carburant a été déterminée comme étant faible sur base de l'information d'admission détectée par le capteur d'information d'admission (484, 485) et de la vitesse du moteur détectée par le capteur de vitesse du moteur (451).

2. Véhicule de type à enfourcher selon la revendication 1, dans lequel le contrôleur (60, 72 ; 160, 172 ; 260, 272 ; 360, 372) est adapté pour ne pas commander au composant de rapportage (62) d'établir un rapport si le composant de détermination de temps (70) a déterminé que le temps écoulé n'a pas excédé le temps de base, même si la consommation de carburant a été déterminée comme étant faible sur base de l'information d'admission détectée par le capteur d'information d'admission (484, 485) et de la vitesse du moteur détectée par le capteur de vitesse du moteur (451).

3. Véhicule de type à enfourcher selon la revendication 1 ou 2, dans lequel le contrôleur (60, 72 ; 160, 172 ; 260, 272 ; 360, 372) est adapté pour commander au composant de rapportage (62) d'établir un rapport si le composant de détermination de temps (70) a déterminé que le temps écoulé a excédé le temps de base, et si la consommation de carburant a été déterminée comme étant faible sur base de l'information d'admission détectée par le capteur d'information d'admission (484, 485) et de la vitesse du moteur détectée par le capteur de vitesse du moteur (451).

4. Véhicule à enfourcher selon l'une quelconque des revendications 1 à 3, dans lequel le contrôleur (60, 72 ; 160, 172 ; 260, 272 ; 360, 372) est adapté pour ne pas commander au composant de rapportage (62) d'établir un rapport si la consommation de carburant est déterminée comme étant élevée sur base de l'information d'admission détectée par le capteur d'information d'admission (484, 485) et de la vitesse du moteur détectée par le capteur de vitesse du moteur (451).

5. Véhicule à enfourcher selon l'une quelconque des revendications 1 à 4, dans lequel ledit véhicule n'a pas de capteur de vitesse du véhicule pour capter la vitesse du véhicule.

6. Véhicule à enfourcher selon l'une quelconque des revendications 1 à 5, dans lequel la vitesse de base du moteur est la même que la vitesse du moteur la plus faible parmi toutes les vitesses du moteur pour lesquelles la consommation de carburant est déterminée comme étant faible.

7. Véhicule à enfourcher selon l'une quelconque des revendications 1 à 5, comprenant en outre :
une roue motrice (16) adaptée pour être entraînée par la rotation du moteur (41) ; et
un embrayage adapté pour commuter automatiquement entre la transmission et la non-transmission de la rotation du moteur (41) à la roue motrice (16) en fonction d'une augmentation ou d'une diminution de la vitesse du moteur,
dans lequel la vitesse de base du moteur est réglée pour être au moins la vitesse du moteur à laquelle l'embrayage commute d'un état où la rotation du moteur (41) n'est pas transmise à la roue motrice (16) à un état où la rotation du moteur (41) est transmise à la roue motrice (16) .

8. Véhicule à enfourcher selon l'une quelconque des revendications 1 à 7, dans lequel le temps de base est réglé à une valeur spécifique comprise entre au moins une seconde et pas plus de cinq secondes.

9. Véhicule à enfourcher selon l'une quelconque des revendications 1 à 8, dans lequel l'information d'admission est une information d'ouverture d'accélérateur.

10. Véhicule à enfourcher selon l'une quelconque des revendications 1 à 8, dans lequel l'information d'admission est une information de pression d'admission.

11. Véhicule à enfourcher selon l'une quelconque des revendications 1 à 10, dans lequel est réglé un temps de continuité, qui est une durée spécifique, et le contrôleur (60, 72 ; 160, 172 ; 260, 272 ; 360, 372) est adapté pour commander au composant de rapportage (62) d'établir un rapport à condition que ce temps de continuité soit excédé d'un temps écoulé après avoir déterminé que la consommation de carburant est faible sur base de l'information d'admission détectée par le capteur d'information d'admission (484, 485) et de la vitesse du moteur détectée par le capteur de vitesse du moteur (451).

12. Véhicule de type à enfourcher selon la revendication 11, dans lequel les temps d'une pluralité de temps de continuité sont réglés en fonction d'une pluralité de différents jeux d'information d'admission, et le contrôleur (60, 72 ; 160, 172 ; 260, 272 ; 360, 372) est adapté pour commander au composant de rapportage (62) d'établir un rapport à condition que le temps écoulé depuis qu'il a été déterminé que la consommation de carburant est faible sur base de l'information d'admission détectée par le capteur d'information d'admission (484, 485) et de la vitesse du moteur détectée par le capteur de vitesse du moteur (451) ait excédé le temps de continuité correspondant à l'information d'admission détectée.

13. Véhicule de type à enfourcher selon la revendication 12, dans lequel un premier temps de continuité est réglé pour une première information d'admission parmi la pluralité de jeux d'information d'admission, et un deuxième temps de continuité supérieur au premier temps de continuité est réglé pour une deuxième information d'admission dont le volume est supérieur à celui de la première information d'admission.

14. Procédé de contrôle d'un véhicule de type à enfourcher comprenant un moteur (41) et un régulateur de volume d'admission (483) adapté pour augmenter ou diminuer le volume d'admission du moteur (41), le procédé comprenant :
la détection d'information d'admission relative au volume d'admission du moteur (41) régulé par le régulateur de volume d'admission (483) ;
la détection de la vitesse du moteur (41) ;
le rapportage d'information relative à la consommation de carburant du moteur (41) ; et
la détermination du fait que la consommation de carburant est faible ou non sur base de l'information d'admission détectée et de la vitesse du moteur détectée, et également la commande de l'établissement d'un rapport à condition que la consommation de carburant soit déterminée comme étant faible, en utilisant une vitesse spécifique du moteur qui est supérieure à une vitesse de ralenti prédéterminée comme vitesse de base du moteur, et la détermination du fait qu'un temps écoulé depuis que la vitesse du moteur détectée a dépassé cette vitesse de base du moteur a excédé ou non un temps de base prédéterminé, et la non-commande de l'établissement d'un rapport s'il n'a pas été déterminé que le temps écoulé depuis que la vitesse du moteur a dépassé la vitesse de base du moteur a excédé le temps de base, même si la consommation de carburant a été déterminée comme étant faible sur base de l'information d'admission détectée et de la vitesse du moteur détectée.

15. Procédé de contrôle d'un véhicule de type à enfourcher selon la revendication 14, comprenant en outre :
la non-commande de l'établissement d'un rapport s'il a été déterminé que le temps écoulé n'a pas excédé le temps de base, et si la consommation de carburant a été déterminée comme étant faible sur base de l'information d'admission détectée et de la vitesse du moteur détectée.
